(19) Europäisches Patentamt
European Patent Office
Office européen des brevets

(11) EP 4 047 050 A1

(12) **EUROPEAN PATENT APPLICATION**
published in accordance with Art. 153(4) EPC

(43) Date of publication:
**24.08.2022 Bulletin 2022/34**

(21) Application number: **20876167.6**

(22) Date of filing: **19.10.2020**

(51) International Patent Classification (IPC):
***C08L 21/00*** (2006.01) ***C08J 3/12*** (2006.01)
***C08J 5/04*** (2006.01) ***C08K 5/17*** (2006.01)
***C08K 5/19*** (2006.01) ***C08L 1/08*** (2006.01)
***C08L 23/26*** (2006.01) ***C08L 71/02*** (2006.01)

(52) Cooperative Patent Classification (CPC):
**C08J 3/12; C08J 5/04; C08K 5/17; C08K 5/19; C08L 1/08; C08L 21/00; C08L 23/26; C08L 71/02**

(86) International application number:
**PCT/JP2020/039237**

(87) International publication number:
**WO 2021/075579 (22.04.2021 Gazette 2021/16)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **18.10.2019 JP 2019191069**
**03.07.2020 JP 2020115850**

(71) Applicant: **Nippon Paper Industries Co., Ltd.**
**Tokyo 114-0002 (JP)**

(72) Inventors:
- **ITO, Kotaro**
  **Tokyo 114-0002 (JP)**
- **MORITA, Masahiro**
  **Tokyo 114-0002 (JP)**
- **TAKAKI, Mei**
  **Tokyo 114-0002 (JP)**
- **KATO, Hayato**
  **Tokyo 114-0002 (JP)**
- **ONO, Isamu**
  **Tokyo 114-0002 (JP)**

(74) Representative: **Müller-Boré & Partner Patentanwälte PartG mbB**
**Friedenheimer Brücke 21**
**80639 München (DE)**

# (54) RUBBER ADDITIVE COMPOSITION, RUBBER COMPOSITION, AND METHOD FOR PRODUCING SAME

(57) An object of the present invention is to provide a rubber additive composition capable of producing a rubber composition having well-balanced strength. The present invention provides a rubber additive composition containing (A): anion-modified cellulose and (B): a hydrophobizing agent, the component (B) containing at least one selected from the group consisting of (B1): a polyether amine having a primary amino group at an end of a polyether skeleton and (B2): an amine compound having a hydrocarbon group with a carbon number of 3 to 50 or a quaternary ammonium salt having a hydrocarbon group with a carbon number of 3 to 50.

EP 4 047 050 A1

## Description

Field

The present invention relates to a rubber additive composition, a rubber composition, and methods for producing them.

Background

A technique causing a rubber composition to contain a material produced by disentangling plant fiber finely to a nano level called cellulose nanofiber to improve various kinds of strengths such as tensile strength of the rubber composition has recently been known. A rubber composition containing a rubber component and cellulose-based fiber and having favorable strength is developed, for example (refer to Patent Literature 1).

As a technique to produce a rubber composition more simply, a method for producing a rubber composition in which rubber having a low water content is blended with cellulose fiber not nanosized is developed (refer to Patent Literature 2). The method of Patent Literature 2 enables dry kneading of hydrophobic rubber and hydrophilic cellulose.

Citation List

Patent Literature

Patent Literature 1: Japanese Patent Application Laid-open No. 2018-193465
Patent Literature 2: Japanese Patent Application Laid-open No. 2017-52942

Summary

Technical Problem

The method of production described in Patent Literature 1 requires a step of nanosizing the cellulose-based fiber. On the other hand, the method described in Patent Literature 2 can omit the nanosizing step. Although the rubber composition produced by the method described in Patent Literature 2 has favorable values of tensile characteristics such as breaking elongation and breaking strength, a rubber composition having excellent strength with a good balance cannot necessarily be obtained (refer to Comparative Example 1).

Thus, a rubber composition having well-balanced strength is desired.

A problem of the present invention is to provide a rubber additive composition capable of producing a rubber composition having excellent strength with a good balance. Solution to Problem

The inventors of the present invention have earnestly studied the above problem to find out that the above problem can be solved by containing (A): anion-modified cellulose and (B): a hydrophobizing agent containing at least either (B1): a certain polyether amine or (B2): a certain amine compound or a certain quaternary ammonium salt and have completed the present invention. The inventors of the present invention have found out that further containing (C): an additive, which is at least either (C1): a surfactant or (C2): a thermoplastic resin, and/or performing drying treatment at any production stage improve the characteristics such as the breaking elongation, the breaking strength, the modulus in a low-to-intermediate range, the hardness, the elastic modulus change by temperature, the intermediate stress of a tensile characteristic, and the loss tangent of a rubber composition to be obtained.

Specifically, the inventors of the present invention provide the following [1] to [22].

[1] A rubber additive composition, the composition comprising: (A): anion-modified cellulose; and (B): a hydrophobizing agent, the component (B) containing at least one selected from the group consisting of: (B1): a polyether amine having a primary amino group at an end of a polyether skeleton; and (B2): an amine compound having a hydrocarbon group with a carbon number of 3 to 50 or a quaternary ammonium salt having a hydrocarbon group with a carbon number of 3 to 50.

[2] The rubber additive composition according to [1], wherein the component (A) contains oxidized cellulose, carboxymethylated cellulose, or phosphate-esterified cellulose.

[3] The rubber additive composition according to [1] or [2], wherein the component (B1) contains polyethylene glycol polypropylene glycol amine.

[4] The rubber additive composition according to any one of [1] to [3], wherein the component (B2) contains a

monoalkenyl amine or a dialkenyl dialkyl ammonium salt.

[5] The rubber additive composition according to [4], wherein the component (B2) contains oleyl amine or a dioleyl dimethyl ammonium salt.

[6] The rubber additive composition according to any one of [1] to [5], further comprising (C): an additive, wherein the component (C) contains at least either (C1): a dispersant or (C2): a thermoplastic resin.

[7] The rubber additive composition according to [6], wherein the component (C1) is a polyethylene glycol or a derivative thereof.

[8] The rubber additive composition according to [6] or [7], wherein the component (C2) contains a modified polyolefin.

[9] The rubber additive composition according to any one of [6] to [8], wherein the component (C) contains a modified polyolefin modified with a modifier which contains at least one or more types of compounds selected from the group consisting of an unsaturated carboxylic acid, a derivative of the unsaturated carboxylic acid , and an anhydride of the unsaturated carboxylic acid.

[10] The rubber additive composition according to any one of [1] to [9], wherein the rubber additive composition has a water content of 50% by mass or less.

[11] The rubber additive composition according to any one of [1] to [10], wherein the rubber additive composition is a dry pulverized product having a bulk density of 0.1 to 1 $g/cm^3$.

[12] A method for producing the rubber additive composition according to any one of [1] to [11], the method comprising: Step 1: mixing the component (A) and the component (B) together to obtain a mixture; and Step 2: drying the mixture to obtain a mixed dry product.

[13] The method for producing the rubber additive composition according to [12], wherein when mixing the component (A) and the component (B) together, the component (C1) and/or the component (C2) are further added.

[14] The method for producing the rubber additive composition according to [12], wherein when mixing the component (A) and the component (B) together, the component (C1) is further added, further performing Step 3: blending the component (C2) into the mixed dry product.

[15] The method for producing the rubber additive composition according to any one of [12] to [14], in Step 2, the drying is performed such that a water content of the mixed dry product is 50% by mass or less.

[16] The method for producing the rubber additive composition according to any one of [12] to [15], in Step 2, pulverizing the mixed dry product after drying described above.

[17] The method for producing the rubber additive composition according to [16], the pulverizing is performed such that a bulk density of the mixed dry product is 0.1 to 1 $g/cm^3$.

[18] A rubber composition comprising a kneaded product of a rubber component and the rubber additive composition according to any one of [1] to [11].

[19] A method for producing a rubber composition, the method comprising a step of kneading a rubber component and the rubber additive composition according to any one of [1] to [11].

[20] The method for producing a rubber composition according to [19], wherein the step of kneading includes: mixing the component (A) and the component (B) together to obtain a mixture; drying the mixture to obtain a mixed dry product; and kneading the mixed dry product and a rubber component together.

[21] The method for producing a rubber composition according to [19] or [20], wherein when mixing the component (A) and the component (B) together, the component (C1) and/or the component (C2) are further added.

[22] The method for producing a rubber composition according to [19] or [20], further performing when mixing the component (A) and the component (B) together, further adding the component (C1) and blending the component (C2) during the kneading.

Advantageous Effects of Invention

The present invention can simply produce a rubber composition together with a rubber component and can provide the obtained rubber composition with well-balanced strength.

Description of Embodiments

The following describes the present invention in detail in line with its preferred embodiments. In the present specification, the denotation "AA to BB%" indicates AA% or more and BB% or less.

[1. Rubber additive composition]

The rubber additive composition of the present invention contains (A): anion-modified cellulose (hereinafter, also referred to as a "component (A)") and (B): a hydrophobizing agent (hereinafter, also referred to as a "component (B)"). The component (B) contains (B1): a polyether amine having a primary amino group at an end of a polyether

skeleton (hereinafter, also referred to as a "component (B1)") and/or (B2): an amine compound having a hydrocarbon group with a carbon number of 3 to 50 or a quaternary ammonium salt having a hydrocarbon group with a carbon number of 3 to 50 (hereinafter, also referred to as a "component (B2)").

[1-1. Component (A)]

The component (A) is anion-modified cellulose. Examples of the anion-modified cellulose include oxidized cellulose, carboxymethylated cellulose, and phosphate-esterified cellulose. Among them, the oxidized cellulose or the carboxymethylated cellulose is preferred.

The average fiber diameter of the anion-modified cellulose is preferably 0.1 to 50 μm, more preferably 1 to 40 μm, and even more preferably 10 to 30 μm. The average fiber length of the anion-modified cellulose is preferably 0.1 to 5,000 μm, more preferably 1 to 3,500 μm, and even more preferably 10 to 2,000 μm. When the anion-modified cellulose the average fiber diameter and the average fiber length of which satisfy the numerical ranges is used, a rubber composition satisfying desired property values can be obtained.

The average fiber diameter and the average fiber length of the anion-modified cellulose are a length weighted average fiber width and a length weighted average fiber length, respectively, measured using a fiber tester (manufactured by Lorentzen & Wettre).

A raw material of the anion-modified cellulose (hereinafter, also referred to as a "cellulose raw material") may be kraft pulp or sulfite pulp derived from wood, powdery cellulose obtained by pulverizing them with a high-pressure homogenizer, a mill, or the like, microcrystalline cellulose powder obtained by refining them by chemical treatment such as acid hydrolysis, or the like. In addition, raw materials derived from plants such as kenaf, hemp, rice, bagasse, and bamboo can also be used. From the viewpoint of mass production and costs, preferred are the powdery cellulose, the microcrystalline cellulose powder, and chemical pulp such as kraft pulp or sulfite pulp. When the chemical pulp is used, known bleaching treatment is preferably performed to remove lignin. As the bleached pulp, bleached kraft pulp or bleached sulfite pulp with a whiteness (ISO 2470) of 80% or more can be used, for example.

The powdery cellulose is a rod-like particle formed of microcrystalline or crystalline cellulose obtained by removing a noncrystalline part of wood pulp by acid hydrolysis and then performing pulverizing and sifting. In the powdery cellulose, the polymerization degree of cellulose is normally about 100 to 500. The degree of crystallinity of the powdery cellulose by X-ray diffraction is normally 70 to 90%. The volume average particle diameter by a laser diffraction particle size distribution apparatus is normally 100 μm or less and preferably 50 μm or less. Such powdery cellulose may be prepared by refining and drying an undecomposed residue obtained after carefully selected pulp is acid hydrolyzed and performing pulverization and sifting, or commercially available products such as KC Flock (registered trademark) (manufactured by Nippon Paper Industries Co., Ltd.), Ceolus (registered trademark) (manufactured by Asahi Kasei Chemicals Corporation), and Avicel (registered trademark) (manufactured by FMC Corporation) may be used.

The method of bleaching can be performed by combining a chlorine step (C), chlorine dioxide bleaching (D), alkali extraction (E), hypochlorite bleaching (H), hydrogen peroxide bleaching (P), an alkaline hydrogen peroxide step (Ep), an alkaline hydrogen peroxide-and-oxygen step (Eop), an ozone step (Z), a chelate step (Q), and the like. The method of bleaching can be performed by a sequence such as C/D-E-H-D, Z-E-D-P, Z/D-Ep-D, Z/D-Ep-D-P, D-Ep-D, D-Ep-D-P, D-Ep-P-D, Z-Eop-D-D, Z/D-Eop-D, or Z/D-Eop-D-E-D, for example. "/" in the sequence means that the steps before and after "/" are performed continuously without washing.

The cellulose raw material made fine with a dispersing apparatus of a high-speed rotary type, a colloid mill type, a high-pressure type, a roll mill type, an ultrasonic type, or the like, wet high-pressure or ultrahigh-pressure homogenizer, or the like can also be used as the cellulose raw material.

(Oxidized Cellulose)

In the oxidized cellulose, at least part of its cellulose molecular chains preferably includes a structural unit having a carboxy group in which the carbon atom having a primary hydroxy group at the C6 position of a glucopyranose unit is selectively oxidized.

The glucopyranose unit refers to a structural unit represented by Formula (0) below.

[Chemical Formula 1]

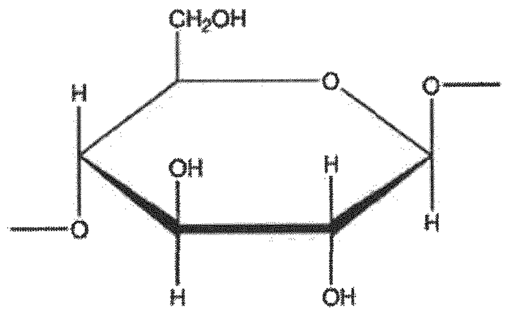

(0)

The carboxy group amount of the oxidized cellulose is preferably 0.6 to 2.0 mmol/g, more preferably 1.0 to 2.0 mmol/g, and even more preferably 1.4 to 1.6 mmol/g with respect to the bone-dry mass of the oxidized cellulose. When the carboxy group amount is 0.6 mmol/g or less, faulty dispersion is likely to occur when blended into the rubber component. When the carboxy group amount is 2.0 mmol/g or more, desired properties cannot necessarily be obtained.
The carboxy group amount can be calculated as follows. Prepared is 60 ml of 0.5% by mass slurry (a water dispersion liquid) of the oxidized cellulose. A 0.1 M aqueous hydrochloric acid solution is added to the prepared slurry to adjust it to pH of 2.5. Next, a 0.05 N aqueous sodium hydroxide solution is added dropwise thereto, and electric conductivity is measured until the pH reaches 11. From a sodium hydroxide amount (a) consumed in a neutralization stage of a weak acid, in which a change in the electric conductivity is gentle, the carboxy group amount can be calculated using the following expression:

$$\text{The carboxy group amount [mmol/g the oxidized cellulose]} = a\ [\text{ml}] \times 0.05/\text{oxidized cellulose mass [g]}$$

The oxidized cellulose can be prepared by oxidizing the cellulose raw material using an oxidizer. The oxidation reaction is preferably performed using the oxidizer in the presence of an N-oxyl compound and a bromide, an iodide, or a mixture thereof. When the cellulose raw material is oxidized by such a method of oxidation, the carbon atom having a primary hydroxy group at the C6 position of the glucopyranose unit forming the cellulose molecular chains is selectively oxidized, and the structural unit having a carboxy group can be obtained.
General Formula (1) below shows a partial structure of the oxidized cellulose obtained by the method of oxidation.

[Chemical Formula 2]

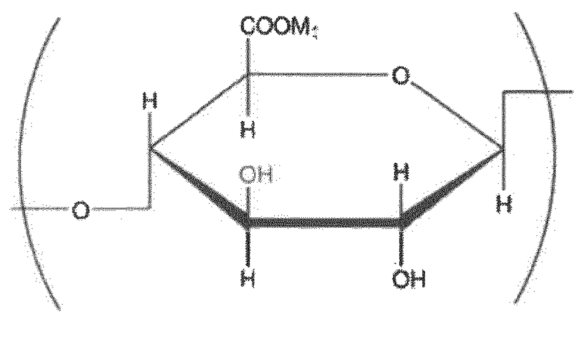

(1)

(In General Formula (1), $M_1$ indicates a cationic salt.)
In General Formula (1), examples of the cationic salt represented as $M_1$ include alkali metal salts such as sodium salts and potassium salts, phosphonium salts, imidazolinium salts, ammonium salts, and sulphonium salts.
Natural cellulose has a microfibril structure in which many linear cellulose molecular chains are bundled through

hydrogen bonding. When the cellulose raw material is oxidized using the N-oxyl compound, as described above, the carbon atom having a primary hydroxy group at the C6 position of the glucopyranose unit forming the cellulose molecular chains is selectively oxidized to a carboxy group through an aldehyde group. Thus, carboxy groups are introduced to the surface of the microfibril structure in a high density.

The N-oxyl compound is a compound capable of generating nitroxy radicals. As the N-oxyl compound, any compound can be used so long as it is a compound performing the target oxidation reaction. Examples of the N-oxyl compound include compounds represented by General Formulae (2) to (5) and (7) below and a compound represented by Formula (6) below.

[Chemical Formula 3]

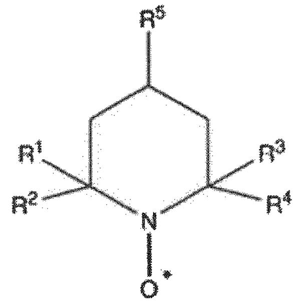

(2)

(In General Formula (2), $R^1$ to $R^4$ each indicate an alkyl group with a carbon number of 1 to 4, which may be the same or different from each other, whereas $R^5$ indicates a hydrogen atom or a hydroxy group.)

[Chemical Formula 4]

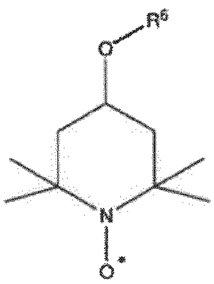

(3)

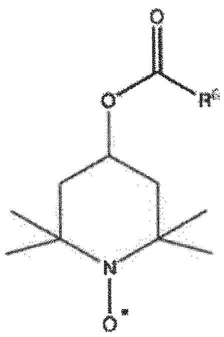

(4)

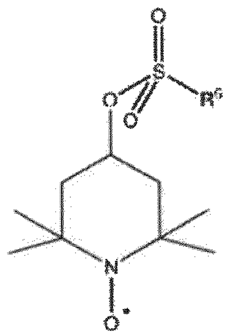

(5)

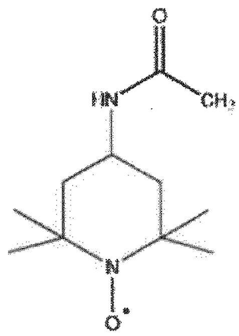

(6)

(In General Formulae (3) to (5), $R^6$ indicates a linear or branched hydrocarbon group with a carbon number of 1 to 4.)

[Chemical Formula 5]

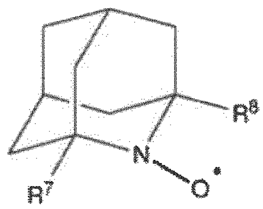

(7)

(In General Formula (7), $R^7$ and $R^8$ each indicate a hydrogen atom or a linear or branched alkyl group with a

carbon number of 1 to 6, which may be the same or different from each other.)

In General Formula (2), examples of the alkyl group with a carbon number of 1 to 4 represented by $R^1$ to $R^4$ include a methyl group, an ethyl group, a propyl group, and a butyl group. Among them, a methyl group or an ethyl group is preferred.

In General Formulae (3) to (5), examples of the linear or branched hydrocarbon group with a carbon number of 1 to 4 represented by $R^6$ include a methyl group, an ethyl group, an n-propyl group, an isopropyl group, an n-butyl group, an s-butyl group, and a t-butyl group. Among them, a methyl group or an ethyl group is preferred.

In General Formula (7), examples of the linear or branched alkyl group with a carbon number of 1 to 6 represented by $R^7$ and $R^8$ include a methyl group, an ethyl group, an n-propyl group, an isopropyl group, an n-butyl group, an s-butyl group, a t-butyl group, an n-pentyl group, and an n-hexyl group. Among them, a methyl group or an ethyl group is preferred.

Examples of the compound represented by General Formula (2) include 2,2,6,6-tetramethyl-1-piperidine-N-oxyradical (hereinafter, also referred to as "TEMPO") and 4-hydroxy-2,2,6,6-tetramethyl-1-piperidine-N-oxyradical (hereinafter, also referred to as "4-hydroxy TEMPO")

The N-oxyl compound may be a derivative of TEMPO or 4-hydroxy TEMPO. Examples of the derivative of 4-hydroxy TEMPO include the compound represented by General Formula (3), that is, a derivative obtained by etherifying the hydroxy group of 4-hydroxy TEMPO with an alcohol having a linear or branched hydrocarbon group with a carbon atom number of four or less and the compound represented by General Formula (4) or (5), that is, a derivative obtained through esterification with carboxylic acid or sulfonic acid.

In etherifying 4-hydroxy TEMPO, the alcohol with a carbon number of four or less is used, whereby the derivative to be obtained is made water soluble regardless of the presence or absence of saturated and unsaturated bonds in the alcohol and favorably functions as an oxidation catalyst.

When the N-oxyl compound is the compound represented by General Formula (6), that is, a compound obtained through acetylation of the amino group of 4-amino TEMPO, moderate hydrophobicity is imparted, it is low priced, and uniform oxidized cellulose can be obtained, which is preferred. When the N-oxyl compound is the compound represented by General Formula (7), that is, an azaadamantane type nitroxy radical, uniform oxidized cellulose can be obtained in a short time, which is preferred.

The usage amount of the N-oxyl compound is not limited to a particular amount so long as it is a catalyst amount enabling the cellulose raw material to be oxidized. The usage amount is preferably 0.01 to 10 mmol, more preferably 0.01 to 1 mmol, and even more preferably 0.01 to 0.5 mmol with respect to the cellulose raw material in a bone-dry mass of 1 g, for example,

The bromide used in the oxidation of the cellulose raw material is a compound containing bromine, and examples thereof include alkali metal bromides capable of being dissociated in water to be ionized. The iodide is a compound containing iodine, and examples thereof include alkali metal iodides.

The usage amount of the bromide or the iodide can be adjusted to the extent that the target oxidation reaction can be facilitated. The total amount of the bromide and the iodide is preferably 0.1 to 100 mmol, more preferably 0.1 to 10 mmol, and even more preferably 0.5 to 5 mmol with respect to the cellulose raw material in a bone-dry mass of 1 g, for example.

As the oxidizer, known oxidizers such as halogens, hypohalous acids, halous acids, perhalogen acids, and salts thereof, halogen oxides, and peroxides can be used, for example. Among them, preferred is sodium hypochlorite, which is low priced and has less environmental load.

The usage amount of the oxidizer, which may be an amount performing the oxidization reaction, is preferably 0.5 to 500 mmol, more preferably 0.5 to 50 mmol, and even more preferably 2.5 to 25 mmol with respect to the cellulose raw material in a bone-dry mass of 1 g, for example.

In the oxidation reaction of the cellulose raw material, the reaction efficiently proceeds even on relatively gentle conditions. Thus, the reaction temperature may be room temperature of about 15 to 30°C. However, along with the progress of the reaction, carboxy groups are generated in cellulose, and thus the pH value of the reaction liquid reduces. Thus, to make the oxidation reaction efficiently proceed, an alkaline solution such as an aqueous sodium hydroxide solution may be added to the reaction system as needed. The pH value of the reaction liquid is normally kept at about 9 to 12 and is preferably kept at about 10 to 11. The reaction medium is preferably water because of being easy to handle, being difficult to cause side reactions, and the like.

The reaction time of the oxidation reaction, which can be set as appropriate in accordance with the extent of the progress of oxidation, is normally about 0.5 to 6 hours and preferably about 0.5 to 4 hours.

The oxidation reaction may be performed separately in two stages. A cationic salt of the oxidized cellulose obtained by filtering after the end of a first-stage reaction is again oxidized on the same or a different reaction condition, whereby carboxy groups can be efficiently introduced to the cellulose raw material without receiving reaction inhibition by a salt secondarily produced in the first-stage reaction, for example.

In the oxidized cellulose obtained by the oxidation reaction, the carboxy group introduced to the cellulose raw material is normally an alkyl metal salt such as a sodium salt (that is, a carboxylate group). The alkali metal salt of the

oxidized cellulose may be substituted by another cationic salt such as a phosphonium salt, an imidazolinium salt, an ammonium salt, or a sulfonium salt. The substitution can be performed by a known method.

Examples of another method of oxidation include a method bringing ozone-containing gas and the cellulose raw material into contact with each other to perform oxidation. This method of oxidation oxidizes at least the carbon atoms having a hydroxy group at positions 2 and 6 of a glucopyranose ring and causes decomposition of cellulose chains.

The ozone concentration of the ozone-containing gas is preferably 50 to 250 g/$m^3$ and more preferably 50 to 220 g/$m^3$. The ozone addition amount to the cellulose raw material is preferably 0.1 to 30 parts by mass and more preferably 5 to 30 parts by mass with the solid content of the cellulose raw material as 100 parts by mass. The ozone treatment temperature is preferably 0 to 50°C and more preferably 20 to 50°C. The ozone treatment time, which is not limited to a particular time, is normally about 1 to 360 minutes and preferably about 30 to 360 minutes. When the conditions of the ozone treatment are within these ranges, cellulose can be prevented from being excessively oxidized and decomposed, making the yield of the oxidized cellulose favorable.

After the ozone treatment is performed, additional oxidation treatment may be performed using an oxidizer. The oxidizer for use in the additional oxidation treatment is not limited to a particular oxidizer; examples thereof include chlorine-based compounds such as chlorine dioxide and sodium chlorite, oxygen, hydrogen peroxide, peroxosulfuric acid, and peroxyacetic acid. Any of these oxidizers is dissolved in water or a polar organic solvent such as alcohol to prepare an oxidizer solution, and the cellulose raw material is immersed in the solution, whereby the additional oxidation treatment can be performed, for example.

The oxidized cellulose obtained by the oxidation reaction is preferably washed from the viewpoint of avoiding side reactions. The method of washing is not limited to a particular method and can be performed by a known method.

(Carboxymethylated Cellulose)

a partial structure of the carboxymethylated cellulose is illustrated in General Formula (8).

[Chemical Formula 6]

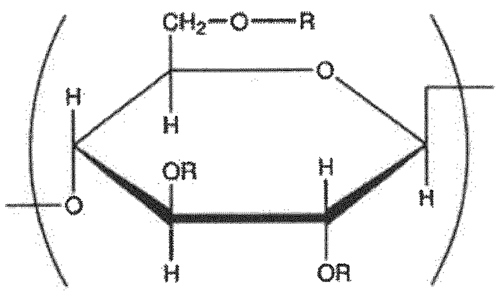

(8)

(In General Formula (8), R indicates a hydrogen atom, an alkali metal, or a group represented by General Formula (9).)

[Chemical Formula 7]

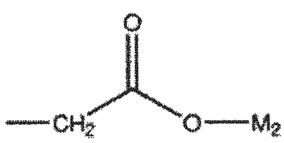

(9)

(In General Formula (9), $M_2$ indicates a hydrogen atom or an alkali metal.)

Examples of the alkali metal represented as R in General Formula (8) and $M_2$ in General Formula (9) include sodium and potassium. Among them, sodium is preferred.

The carboxymethyl substitution degree of carboxymethylated glucose per glucose unit is normally 0.01 to 0.50, preferably 0.01 to 0.40, and more preferably 0.05 to 0.35. When the carboxymethyl substitution degree per glucose unit is 0.01 or less, faulty dispersion is likely to occur when it is blended into the rubber component. On the other hand, when

the carboxymethyl substitution degree per glucose unit is 0.50 or more, desired properties cannot necessarily be obtained.

The carboxymethyl substitution degree per glucose unit can be calculated by the following method. The carboxymethylated cellulose (bone-dried) is precisely weighed in an amount of about 2.0 g and is put into a 300 mL common plug-equipped conical flask. A liquid in an amount of 100 mL in which 100 mL of guaranteed concentrated nitric acid is added to 1,000 mL of methanol is added, and the mixture is shaken for 3 hours to transform salt type carboxymethylated cellulose (hereinafter, also referred to as "salt type CM cellulose") into acid type carboxymethylated cellulose (hereinafter, also referred to as "acid type CM cellulose"). The acid type CM cellulose (bone-dried) is precisely weighed in an amount of 1.5 to 2.0 g and is put into a 300 mL common plug-equipped conical flask. The acid type CM cellulose is moistened with 15 mL of 80% methanol, 100 mL of 0.1 N NaOH is added thereto, and the mixture is shaken at room temperature for 3 hours. Using phenolphthalein as an indicator, excess NaOH is back titrated with 0.1 N $H_2SO_4$, and the carboxymethyl substitution degree (DS) can be calculated by the following expression:

$$A = [(100 \times F - (0.1\ N\ H_2SO_4\ (mL)) \times F') \times 0.1] / (\text{the bone-dry mass of the acid type CM cellulose (g)})$$

$$DS = 0.162 \times A / (1 - 0.058 \times A)$$

A: the amount of 1 N NaOH (mL) required for neutralizing 1 g of the acid type CM cellulose
F': a factor of 0.1 N $H_2SO_4$
F: a factor of 0.1 N NaOH

The carboxymethylated cellulose can be obtained by subjecting the cellulose raw material to mercerization treatment with a mercerization agent and then reacting the cellulose raw material with a carboxymethylation agent.

The mercerization treatment is normally performed by mixing the cellulose raw material, a solvent, and the mercerization agent together.

The solvent is preferably at least either water or a lower alcohol and more preferably water. The usage amount of the solvent is preferably 3 to 20 times the cellulose raw material in terms of mass.

Examples of the lower alcohol include methanol, ethanol, n-propyl alcohol, isopropyl alcohol, n-butyl alcohol, isobutyl alcohol, and tertiary butyl alcohol.

The lower alcohol may be used as one type alone or be used as a mixture solvent in which two or more types are combined with each other.

When the solvent contains the lower alcohol, its mixing ratio is preferably 60 to 95% by mass.

As the mercerization agent, a hydroxide of an alkali metal is preferred, and sodium hydroxide or potassium hydroxide is more preferred. The usage amount of the mercerization agent is preferably 0.5 to 20 times per anhydrous glucose residue of the cellulose raw material in terms of mol.

The reaction temperature of the mercerization treatment is normally 0 to 70°C and preferably 10 to 60°C. The reaction time of the mercerization treatment is normally 15 minutes to 8 hours and preferably 30 minutes to 7 hours. The mercerization treatment may be performed with stirring.

After the mercerization treatment, the carboxymethylation agent is added to the reaction system to introduce carboxymethyl groups to the cellulose. As the carboxymethylation agent, a compound represented by General Formula (10) below is preferred, and monochloro acetic acid or sodium monochloro acetate is more preferred. The addition amount of the carboxymethylation agent is preferably 0.05 to 10.0 times per glucose residue of the cellulose raw material in terms of mol.

[Chemical Formula 8]

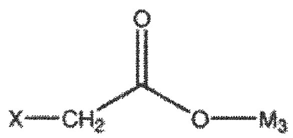

(10)

(In General Formula (10), X indicates a halogen atom, whereas $M_3$ indicates a hydrogen atom or an alkali metal.)

Examples of the halogen atom represented as X in General Formula (10) include a chlorine atom, a bromine atom, and an iodine atom. Among them, a chlorine atom is preferred.

Examples of the alkali metal represented as $M_3$ in General Formula (10) include sodium and potassium. Among them, sodium is preferred.

The reaction temperature of the carboxymethylation reaction is normally 30 to 90°C and preferably 40 to 80°C. The reaction time is normally 30 minutes to 10 hours and preferably 1 to 4 hours.

(Phosphate-esterified Cellulose)

The phosphorylated cellulose is cellulose phosphate-esterified with a compound having a phosphoric acid. Examples of the compound having a phosphoric acid include phosphoric acid, polyphosphoric acid, phosphorus acid, phosphonic acid, polyphosphonic acid, and esters and salts of these. These compounds are low in cost and easy to handle.

Examples of the compound having a phosphoric acid group include phosphoric acid, sodium dihydrogen phosphate, disodium hydrogen phosphate, trisodium phosphate, sodium pyrophosphate, sodium metaphosphate, potassium dihydrogen phosphate, dipotassium hydrogen phosphate, tripotassium phosphate, potassium pyrophosphate, potassium metaphosphate, ammonium dihydrogen phosphate, diammonium hydrogen phosphate, triammonium phosphate, ammonium pyrophosphate, and ammonium metaphosphate. Among them, because of having high efficiency of phosphate-esterification and being easy to be industrially used, preferred are phosphoric acid, sodium salts of phosphoric acid, potassium salts of phosphoric acid, and ammonium salts of phosphoric acid, and more preferred are sodium dihydrogen phosphate and disodium hydrogen phosphate.

The compound having a phosphoric acid group may be used as one type alone or be used as a combination of two or more types.

In the phosphate-esterified cellulose, the lower limit of the introduction amount of a phosphoric acid group per g (weight) of the phosphate-esterified cellulose is preferably 0.1 mmol/g or more. When the introduction amount of a phosphoric acid group per g (weight) of the phosphorylated cellulose is less than 0.1 mmol/g, faulty dispersion is likely to occur when it is blended into the rubber component. The upper limit of the introduction amount of a phosphoric acid group is preferably 3.5 mmol/g or less. When the introduction amount of a phosphoric acid group per g (weight) of the phosphate-esterified cellulose is more than 3.5 mmol/g, desired properties cannot necessarily be obtained.

The introduction amount of a phosphoric acid group per g (weight) of the phosphorylated cellulose is preferably 0.1 to 3.5 mmol.

The phosphate-esterification reaction is performed by reacting the compound having a phosphoric acid group with the cellulose raw material, for example. Examples of the method for reacting the cellulose raw material and the compound having a phosphoric acid group with each other include a method mixing powder or an aqueous solution of the compound having a phosphoric acid group into the cellulose raw material and a method adding an aqueous solution of the compound having a phosphoric acid group to slurry of the cellulose raw material.

Among these, because of increased reaction uniformity and increased phosphate-esterification efficiency, the method mixing an aqueous solution of the compound having a phosphoric acid group into the cellulose raw material or slurry thereof is preferred. The pH of the aqueous solution of the compound having a phosphoric acid group is preferably 7 or less from the viewpoint of increasing the efficiency of introduction of a phosphoric acid group and more preferably 3 to 7 from the viewpoint of inhibiting hydrolysis.

The lower limit of the addition amount of the compound having a phosphoric acid group is preferably 0.2 part by mass or more and more preferably 1 part by mass or more in terms of phosphorus atom with respect to 100 parts by mass of the cellulose raw material. Being within the range can improve the yield of the phosphate-esterified cellulose. On the other hand, the upper limit thereof is preferably 500 parts by mass or less and more preferably 400 parts by mass or less. Being within the range can efficiently obtain yield corresponding to the addition amount of the compound having a phosphoric acid group.

The addition amount of the compound having a phosphoric acid group is preferably 0.2 to 500 parts by mass and preferably 1 to 400 parts by mass.

When the cellulose raw material and the compound having a phosphoric acid group are reacted with each other, a basic compound may further be added to the reaction system. Examples of a method for adding the basic compound to the reaction system include a method adding the basic compound to slurry of the cellulose raw material, an aqueous solution of the compound having a phosphoric acid group, or slurry of the cellulose raw material and the compound having a phosphoric acid group.

The basic compound, which is not limited to a particular compound, is preferably a nitrogen-containing compound showing basicity. "Showing basicity" normally means that an aqueous solution of the basic compound indicates pink to red in the presence of a phenolphthalein indicator or that pH of an aqueous solution of the basic compound is larger than 7.

The nitrogen-containing compound showing basicity is not limited to a particular compound so long as it produces the effect of the present invention. In particular, a compound having an amino group is preferred. Examples thereof

include urea, methylamine, ethylamine, trimethylamine, triethylamine, monoethanolamine, diethanolamine, triethanolamine, pyridine, ethylenediamine, and hexamethylenediamine. Among these, urea is preferred because of being low in cost and easy to handle.

The addition amount of the basic compound is preferably 2 to 1,000 parts by mass and more preferably 100 to 700 parts by mass. The reaction temperature is preferably 0 to 95°C and more preferably 30 to 90°C. The reaction time, which is not limited to a particular time, is normally about 1 to 600 minutes and preferably 30 to 480 minutes. When the reaction condition is within any of these ranges, the situation that the phosphoric acid group is excessively introduced to cellulose to make it likely to be dissolved can be prevented, and the yield of the phosphate-esterified cellulose can be improved.

After the compound having a phosphoric acid group is reacted with the cellulose raw material, a suspension is normally obtained. The suspension is dehydrated as needed. After the dehydration, heating treatment is preferably performed. By this treatment, hydrolysis of the cellulose raw material can be inhibited. The heating temperature is preferably 100 to 170°C, and more preferably it is heated at 130°C or less (more preferably 110°C or less) while water is contained during the heating treatment, whereas it is heated at 100 to 170°C after water is removed.

The phosphate-esterified cellulose is preferably subjected to washing treatment such as washing with cold water after boiling.

(Fibrillation)

The anion-modified cellulose may be subjected to fibrillation treatment. By this treatment, sizes such as a fiber diameter and a fiber length can be adjusted. The fibrillation apparatus is not limited to a particular apparatus; large shear force is preferably applied to a dispersion of anion-modified cellulose fibers using an apparatus of a high-speed rotary type, a colloid mill type, a high-pressure type, a roll mill type, an ultrasonic type, or the like. To perform fibrillation efficiently, a wet high-pressure or ultrahigh-pressure homogenizer, which can apply pressure of 50 MPa or more and apply large shear force to the dispersion of the anion-modified cellulose fibers, is preferably used. The pressure is more preferably 100 MPa or more and even more preferably 140 MPa or more. The number of times of treatment (pass) by the fibrillation apparatus may be one or two or more and is preferably two or more.

(Dispersion)

The anion-modified cellulose is normally dispersed in a solvent. When dispersed in a solvent, mixing with the component (B) and the fibrillation treatment performed as needed are made easy. The solvent is not limited to a particular solvent so long as it enables the anion-modified cellulose fibers to be dispersed; examples thereof include water, organic solvents (hydrophilic organic solvents such as methanol, for example), and mixed solvents of these. The anion-modified cellulose is hydrophilic and is easily mixed with the component (B), and thus the solvent is preferably water.

The solid content concentration of the anion-modified cellulose in the dispersion is normally 0.1% by weight or more, preferably 0.2% by weight or more, and more preferably 0.3% by weight or more. With the concentration in the range above, a liquid amount with respect to the amount of the anion-modified cellulose fibers is appropriate, which is efficient. The upper limit is normally 10% by weight or less and preferably 6% by weight or less. With the concentration in the range above, fluidity can be retained.

Prior to the fibrillation treatment and the dispersion treatment by the high-pressure homogenizer, preliminary treatment can also be performed on the anion-modified cellulose fibers as needed. The preliminary treatment may be performed using a mixing, stirring, emulsifying, or dispersing apparatus such as a high-speed shearing mixer.

The anion-modified cellulose fibers may be in a state of a water dispersion obtained after production or be subjected to posttreatment as needed. Examples of the posttreatment include, but are not limited to, drying (e.g., freeze drying, spray drying, multi-shelf drying, drum drying, belt drying, a method of drying by thinly spreading onto a glass plate or the like, fluidized-bed drying, microwave drying, and heat generating fan type vacuum drying), redispersion to water (the dispersion apparatus is not limited), and pulverization (pulverization using an apparatus such as a cutter mill, a hammer mill, a pin mill, or a jet mill, for example).

The component (A) may be one type of the anion-modified cellulose alone or a combination of two or more types.

[1-2. Component (B)]

The component (B) is a hydrophobizing agent. The hydrophobizing agent contains at least one selected from the group consisting of a component (B1) and a component (B2) .

The component (B1) is a polyether amine having a primary amino group at an end of a polyether skeleton.

The component (B2) is an amine compound having a hydrocarbon group with a carbon number of 3 to 50 or a quaternary ammonium salt having a hydrocarbon group with a carbon number of 3 to 50.

The component (B1) is used as the hydrophobizing agent, whereby a rubber composition having desired properties can be produced. The component (B2) is used as the hydrophobizing agent, whereby the hardness of the rubber composition can be improved.

(Component (B1))

Examples of the component (B1) include a polyether amine having an alkylene oxide such as ethylene oxide or propylene oxide as a polyether skeleton and having a primary amino group at one end or both ends. When the polyether skeleton is formed using a plurality of alkylene oxides, the polyether skeleton may be a random type or a block type. Examples of such as a polyether amine include polyether amines having structures represented by General Formulae (11) to (15) below.

[Chemical Formula 9]

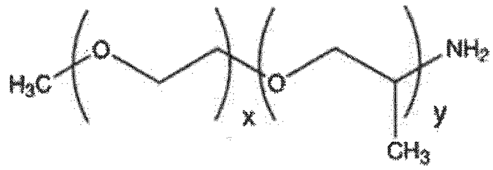

(11)

(In General Formula (11), x represents an average number of moles added of ethylene oxide, which is an integer of 1 to 35, whereas y represents an average number of moles added of propylene oxide, which is an integer of 3 to 40. An ethylene oxide unit (EO)/a propylene oxide unit (PO) is preferably 10 to 40:3 to 15 (molar ratio).)

[Chemical Formula 10]

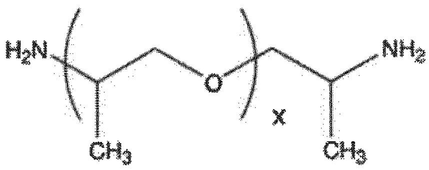

(12)

(In General Formula (12), x represents an average number of moles added of propylene oxide, which is an integer of 1 to 70.)

[Chemical Formula 11]

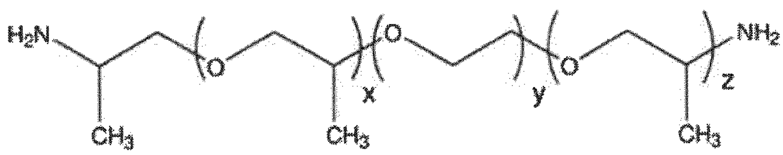

(13)

(In General Formula (13), x and z represent average numbers of moles added of propylene oxide, which are an integer of 1 to 6 in total, whereas y represents an average number of moles added of ethylene oxide, which is an integer of 2 to 40.)

[Chemical Formula 12]

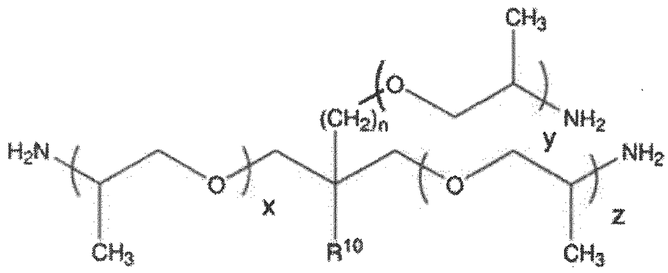

(14)

(In General Formula (14), $R^{10}$ represents a hydrogen atom or an ethyl group, n is 0 or 1, x, y, and z represent average numbers of moles added of propylene oxide, which are integers of 5 to 90 in total.)

[Chemical Formula 13]

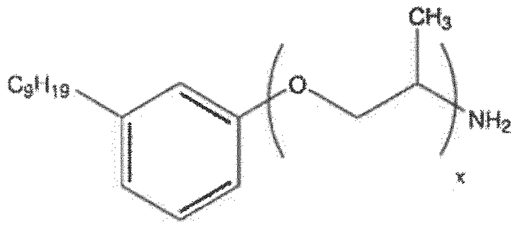

(15)

(In General Formula (15), x represents an average number of moles added of propylene oxide, which is an integer of 10 to 15.)

The average molecular weight of the component (B1) is preferably 200 to 7,000 and more preferably 220 to 6,000 from the viewpoint of expressing desired properties of the rubber composition. The average molecular weight of the component (B1) can be calculated from the average numbers of moles added of ethylene oxide and propylene oxide and the molecular weight of their end structures.

As the component (B1), polyethylene glycol polypropylene glycol amine (the polyether amine having the structure represented by General Formula (11)) is preferred, and more preferred is the polyether amine having the structure represented by General Formula (11) with an average molecular weight of 600 to 3,000.

The component (B1) can be prepared by a known method. Desired amounts of ethylene oxide and propylene oxide are added to a propylene glycol alkyl ether, and then the hydroxy group end may be aminated, for example.

For the component (B1), a commercially available product may be used. Examples of such a commercially available product include JEFFAMINE M Series (M-600, M-1000, M-2005, and M-2070), JEFFAMINE D Series (D-230, D-400, D-2000, and D-4000), JEFFAMINE ED Series (HK-511, ED-600, ED-900, and ED-2003), JEFFAMINE T Series (T-403, T-3000, and T-5000), and JEFFAMINE XJT-436 manufactured by Huntsman Corporation. Note that JEFFAMINE is a registered trademark.

(Component (B2))

In the component (B2), examples of the amine compound having a hydrocarbon group with a carbon number of 3 to 50 (preferably 3 to 45, more preferably 3 to 40, and even more preferably 3 to 30) include propylamine, dodecylamine, stearylamine, 1-hexenylamine, 1-dodecenylamine, oleylamine, 9,12-octadecadienylamine (linoleamine), 9,12,15-octadecatrienylamine, and linoleylamine.

The amine compound having a hydrocarbon group with a carbonnumber of 3 to 50 is preferably an amine compound having an alkyl group or an alkenyl group, more preferably a monoalkenyl amine, and even more preferably oleylamine.

In the component (B2), examples of the quaternary ammonium salt having a hydrocarbon group with a carbon number of 3 to 50 (preferably with a carbon number of 3 to 45, more preferably with a carbon number of 3 to 40, and even more preferably with a carbon number of 3 to 30) include quaternary ammonium salts such as didecyl dimethyl

ammonium chloride, hexadecyl trimethyl ammonium chloride, octadecyl trimethyl ammonium chloride, behenyl trimethyl ammonium chloride, tetradecyl dimethyl benzyl ammonium chloride, monooleyl trimethyl ammonium chloride, dioleyl dimethyl ammonium chloride, polyalkyleneoxy monomethyl dioleyl ammonium chloride, and bis(polyalkyleneoxy) monomethyl monooleyl ammonium chloride.

The quaternary ammonium salt having a hydrocarbon group with a carbon number of 3 to 50 is preferably a quaternary ammonium salt having an alkyl group or an alkenyl group, more preferably a dialkenyl dialkyl ammonium salt, and even more preferably dioleyl dimethyl ammonium chloride. The amine compound and the quaternary ammonium salt of the component (B2) may have at least one hydrocarbon group with a carbon number of 3 to 50 or have two or more.

The hydrophobizing agent preferably contains both the components (B1) and (B2). By containing the both, a rubber composition favorable in all of breaking elongation, breaking strength, a modulus in a low-to-intermediate range, and hardness can be obtained. The modification ratio ((B1)/(B2)) of the component (B1) and the component (B2) to the anion-modified cellulose is normally 90/10 to 10/90, preferably 88/12 to 12/88, more preferably 75/25 to 12/88, and even more preferably 75/25 to 25/75, 70/30 to 30/70, or 65/35 to 35/65. The modification ratio is within these ranges, whereby the occurrence of faulty dispersion of cellulose in the rubber composition can be inhibited, and strength balance can more be favorable.

In the rubber additive composition, the mass ratio (B/A) of the component (B) to the component (A) is preferably 0.5 to 3.5, more preferably 1.0 to 3.0, and even more preferably 1.5 to 2.5. The mass of the component (B) is a total of the masses of the component (B1) and the component (B2). The mass ratio is within these ranges, whereby the occurrence of faulty dispersion of cellulose in the rubber composition can be inhibited, and strength balance can be favorable.

[1-3. Component (C)]

The rubber additive composition of the present invention may contain (C): an additive (hereinafter, also referred to as a "component (C)"). The additive contains at least either a component (C1): a dispersant (hereinafter, also referred to as a "component (C1)") or a component (C2): a thermoplastic resin (hereinafter, also referred to as a "component (C2)").

When the rubber additive composition of the present invention contains the component (C), the characteristics such as the breaking elongation, the breaking strength, the modulus in a low-to-intermediate range, the hardness, the elastic modulus change by temperature, the intermediate stress of a tensile characteristic, and the loss tangent of the rubber composition can further improve.

(Component (C1))

The component (C1) is a dispersant. Note that the component (C1) does not contain ones corresponding to the components (A), (B), and (C2) such as the component (B2).

The dispersant may be either an aqueous or solvent type dispersant; the aqueous dispersant is preferred. The dispersant is preferably a polyalkylene glycol (polyethylene glycol (preferably with a molecular weight of 100 to 800 (300 to 600 in particular) and with an EO number of moles added of 2 to 30 (6 to 14 in particular)), for example) or a derivative thereof (a polymer amine, for example), which is not limiting.

As the component (C1), a commercially available product may be used. Examples of the commercially available product include Fillanol (registered trademark) PA-075F, the same PA-085C, the same PA-107P, Esleam (registered trademark) AD-3172M, the same AD-374M, and the same AD-508E (all of the above are manufactured by NOF Corporation);

Solsperse (registered trademark) 9000, the same 11200, the same 13240, the same 13940, the same 16000, the same 17000, the same 18000, the same 20000, the same 24000SC, the same 24000GR, the same 26000, the same 28000, the same 31845, the same 32000, the same 32500, the same 32550, the same 32600, the same 33000, the same 34750, the same 35100, the same 35200, the same 37500, the same 38500, the same 39000, the same 53095, the same 56000, the same 71000, the same 76500, the same D510, the same D530, the same L300, the same K200, the same K210, the same K500, and the same R700 (all of the above are manufactured by The Lubrizol Corporation);

Flowlen DOPA-15B, the same DOPA-15BHFS, the same DOPA-17HF, the same DOPA-22, the same DOPA-35, the same G-600, the same G-820, the same NC-500, and the same KDG-2400 (all of the above are manufactured by Kyoeisya Chemical Co., Ltd. ) ;

Hinoact KF-1300M, Hinoact KF-1500, Hinoact KF-1700, Hinoact T-6000, Hinoact T-8000, Hinoact T-8000E, Hinoact T-9100, Hinoact A-110, and Hinoact. NB (all of the above are manufactured by Kawaken Fine Chemicals Co., Ltd.);

TEGO Dispers 650, the same Dispers 685, the same 700, the same 710, and the same 760W (all of the above are manufactured by Evonik Industries);

Ajispar PB821, the same PB822, the same PB824, and the same PB881 (all of the above are manufactured by

Ajinomoto Fine-Techno Co., Inc.);
DISPERBYK-106, the same 108, the same 140, the same 142, the same 145, the same 161, the same 162, the same 163, the same 164, the same 167, the same 168, the same 180, the same 182, the same 184, the same 185, the same 187, the same 191, the same 2000, the same 2001, the same 2008, the same 2009, the same 2010, the same 2012, the same 2013, the same 2022, the same 2025, the same 2026, the same 2050, the same 2055, the same 2061, the same 2150, the same 2155, the same 2163, the same 2164, BYK-9076, the same 9077, ANTI-TERRA-U/U100, ANTI-TERRA-204, and the same 250 (all of the above are manufactured by BYK-Chemie);
Shallol DC902P and Shallol DC303P (all of the above are manufactured by DKS Co. Ltd.); and
Texnol IL55, the same L7, and the same CP-81 (all of the above are manufactured by Nippon Nyukazai Co., Ltd.).

The component (C1) may contain a dispersant other than the above. Examples thereof include dispersants other than the above (cationic, amphoteric, anionic, and nonionic surfactants, for example).

In the rubber additive composition, the mass ratio (C1/A) of (C1) to the component (A) is preferably 0.1 to 10, more preferably 0.2 to 5, and even more preferably 0.3 to 1. The mass ratio is within these ranges, whereby the occurrence of faulty dispersion of cellulose in the rubber composition can be inhibited.

(Component (C2))

The component (C2) is a thermoplastic resin.

In the present specification, the thermoplastic resin means a resin showing thermoplasticity, that is, the resin to be softened when it reaches a melting point or a glass transition point. Examples of the thermoplastic resin include polyolefin, polyvinyl chloride, polystyrene, polyvinyl acetate, polyurethane, acrylic resins, polyethylene terephthalate, and modified resins of these; polyolefin or a modified resin thereof is preferred, and a modified polyolefin resin is more preferred. Thus, a rubber additive composition giving a rubber composition favorable in breaking elongation, breaking strength, a modulus in a low-to-intermediate range, and hardness can be obtained.

In the present specification, the modified polyolefin resin is a resin obtained from a polyolefin modified with a modifier. The modified polyolefin resin may be one that is normally added to rubber compositions.

The polyolefin resin as a raw material is not limited to a particular polyolefin resin; examples thereof include a polyolefin resin obtained by copolymerizing ethylene or an $\alpha$-olefin using a Ziegler-Natta catalyst or a metallocene catalyst as a polymerization catalyst. Examples of the polyolefin resin include a polypropylene, an ethylene-propylene copolymer, a propylene-butene copolymer, and an ethylene-propylene-butene copolymer.

The polyolefin resin may be one type alone or be a combination of two or more types. In the latter case, the blending ratio among the resins is not limited to a particular ratio.

As the polyolefin resin, a polyolefin resin obtained using the metallocene catalyst as the polymerization catalyst is preferred. The polyolefin resin obtained using the metallocene catalyst as the polymerization catalyst has features of having narrow molecular weight distribution, having excellent random copolymerizability and narrow composition distribution, and having a wide range of copolymerizable comonomers. As the metallocene catalyst, known ones can be used.

The melting point (Tm) of the polyolefin resin by a differential scanning calorimeter (DSC) is preferably 50 to 120°C and more preferably 60 to 110°C. In the present specification, measurement of Tm by the DSC can be performed as follows. Using a DSC measurement apparatus (TA Instruments Japan Inc.), a sample in an amount of about 10 mg is melted at 200°C for 5 minutes. The temperature is lowered to -60°C at a rate of 10°C/min to crystallize the sample. Subsequently, the temperature is raised up to 200°C at 10°C/min, and a melt peak temperature at the time of melting is measured. The melt peak temperature is set as Tm.

The polyolefin resin preferably contains at least one type selected from the group consisting of the ethylene-propylene copolymer, the propylene-butene copolymer, the ethylene-propylene-butene copolymer, and the polypropylene and more preferably contains the propylene-butene copolymer.

The polyolefin resin preferably contains at least one type selected from the group consisting of the ethylene-propylene copolymer, the propylene-butene copolymer, the ethylene-propylene-butene copolymer, and the polypropylene obtained using the metallocene catalyst as the polymerization catalyst, more preferably contains the propylene-butene copolymer obtained using the metallocene catalyst as the polymerization catalyst, and even more preferably contains the propylene-butene copolymer obtained using the metallocene catalyst as the polymerization catalyst in an amount of 50% by weight or more.

The polypropylene represents a polymer with propylene as a basic unit. The ethylene-propylene copolymer represents a copolymer with ethylene and propylene as basic units. The propylene-butene copolymer represents a copolymer with propylene and butene as basic units.

The polypropylene, the ethylene-propylene copolymer, and the propylene-butene copolymer may contain a small amount of an olefin component other than the respective basic units. Such an olefin component may mix in steps before production of the modified polyolefin resin, for example. The content of the olefin component in the polypropylene,

the ethylene-propylene copolymer, and the propylene-butene copolymer may be an amount not substantially impairing the original performance of the resin.

The component composition of the polyolefin resin is not limited to a particular component composition; the propylene component in the entire polyolefin resin is preferably 60 mol% or more.

The ethylene-propylene copolymer and the propylene-butene copolymer may collectively be referred to as a propylene-based random copolymer. The mole ratio between the ethylene component or the butene component and the propylene component in the propylene-based random copolymer is preferably the ethylene component or the butene component:the propylene component = 5 to 50:95 to 50.

The molecular weight of the polyolefin resin is not limited to a particular value. However, the weight average molecular weight of the modified polyolefin resin is preferably 30,000 to 200,000 and more preferably 50,000 to 150,000. Thus, when the weight average molecular weight of the polyolefin resin is more than 200,000, the polyolefin resin is preferably degraded in the presence of heat or radicals to adjust the molecular weight to an appropriate range, or 200,000 or less, for example, such that the weight average molecular weight of the modified polyolefin resin to be obtained will be within the range described above. The weight average molecular weight is a value measured by gel permeation chromatography (the standard substance: polystyrene).

The polyolefin resin is modified with a modifier to obtain the modified polyolefin resin. The modifier preferably contains at least one or more types of compounds selected from the group consisting of an unsaturated carboxylic acid, an anhydride of the unsaturated carboxylic acid, and a derivative of the unsaturated carboxylic acid.

The unsaturated carboxylic acid means an unsaturated compound having a carboxy group. The derivative of the unsaturated carboxylic acid means mono- or di-ester, amide, imide, or the like of the unsaturated compound. The anhydride of the unsaturated carboxylic acid means an anhydride of the unsaturated compound.

Examples of the unsaturated carboxylic acid, the derivative of the unsaturated carboxylic acid, and the anhydride of the unsaturated carboxylic acid include fumaric acid, maleic acid, itaconic acid, mesaconic acid, citraconic acid, aconitic acid, nadic acid, and derivatives and anhydrides of these; monomethyl fumarate, monoethyl fumarate, monopropyl fumarate, monobutyl fumarate, dimethyl fumarate, diethyl fumarate, dipropyl fumarate, dibutyl fumarate, monomethyl maleate, monoethyl maleate, monopropyl maleate, monobutyl maleate, dimethyl maleate, diethyl maleate, dipropyl maleate, dibutyl maleate, maleimide, and N-phenyl maleimide.

When the modified polyolefin resin is obtained, one type of compound alone or two or more types of compounds in combination selected from the group consisting of the unsaturated carboxylic acid, the anhydride of the unsaturated carboxylic acid, and the derivative of the unsaturated carboxylic acid can be used. In the latter case, the blending ratio among the compounds is not limited to a particular ratio.

One or more types of compounds selected from the group consisting of the unsaturated carboxylic acid, the anhydride thereof, and the derivative thereof preferably contain an unsaturated dicarboxylic acid and more preferably an unsaturated dicarboxylic acid.

One or more types of compounds selected from the group consisting of the unsaturated carboxylic acid, the anhydride thereof, and the derivative thereof preferably contain one or more types selected from the group consisting of itaconic anhydride, maleic anhydride, and maleic acid, are more preferably one or more types selected from the group consisting of itaconic anhydride, maleic anhydride, and maleic acid, and are even more preferably maleic anhydride.

The graft weight of the unsaturated carboxylic acid, the anhydride of the unsaturated carboxylic acid, and the derivative of the unsaturated carboxylic acid (hereinafter, also referred to as a "graft weight") in the modified polyolefin resin is preferably 0.50% by weight or more and more preferably 1.0% by weight or more. The graft weight is 0.50% by weight or more, whereby compatibility with the anion-modified cellulose is favorable. The upper limit of the graft weight is preferably 20.0% by weight or less and more preferably 10.0% by weight or less. The graft weight is 20.0% by weight or less, whereby the influence on compatibility with the rubber component can be reduced. The graft weight of the modified polyolefin resin is preferably 0.50 to 20.0% by weight and more preferably 1.0 to 10.0% by weight.

The graft weight of the modified polyolefin resin can be measured by alkali titration.

In producing the modified polyolefin resin, the modifier such as the unsaturated carboxylic acid, the anhydride of the unsaturated carboxylic acid, and the derivative thereof not graft copolymerized to the polyolefin resin, that is, an unreacted substance may be removed in the process of producing the modified polyolefin resin by an extraction method with a poor solvent, for example.

The modifier may contain a compound other than the unsaturated carboxylic acid, the anhydride of the unsaturated carboxylic acid, and the derivative thereof. Examples of the compound include (meth)acrylate.

The (meth)acrylate is a compound containing at least one (meth)acryloyl group in the molecule. In the present specification, the "(meth)acryloyl group" means an acryloyl group and/or a mathacryloyl group. The (meth)acrylate is preferably a compound represented by General Formula (16) below:

$$CH_2=CR^{20}COOR^{21} \ldots \qquad (16)$$

In General Formula (16), $R^{20}$ represents a hydrogen atom or a methyl group and is preferably a methyl group. $R^{21}$ represents $C_nH_{2n+1}$, where n represents an integer of 1 to 18, which is preferably an integer of 1 to 15 and more preferably an integer of 1 to 13.

Examples of the (meth)acrylate include methyl (meth)acrylate, ethyl (meth)acrylate, n-butyl (meth)acrylate, cyclohexyl (meth)acrylate, hydroxyethyl (meth)acrylate, isobornyl (meth)acrylate, glycidyl (meth)acrylate, octyl (meth)acrylate, lauryl (meth)acrylate, tridecyl (meth)acrylate, stearyl (meth)acrylate, cyclohexyl (meth)acrylate, benzyl (meth)acrylate, phenyl (meth)acrylate, dimethylaminoethyl (meth)acrylate, diethylaminoethyl (meth)acrylate, 1-hydroxyethyl- (meth)acrylate, 2-hydroxyethyl (meth)acrylate, N,N-dimethylaminoethyl (meth)acrylate, acetoacetoxyethyl (meth)acrylate, and (meth)acryloyl morpholine. Among these, preferred are methyl (meth)acrylate, ethyl (meth)acrylate, n-butyl (meth)acrylate, cyclohexyl (meth)acrylate, lauryl (meth)acrylate, tridecyl (meth)acrylate, and lauryl (meth)acrylate, more preferred are methacrylates of these, and even more preferred are methyl methacrylate, n-butyl methacrylate, tridecyl methacrylate, and lauryl methacrylate.

The introduction amount of the (meth)acrylate (hereinafter, also referred to as a "graft weight") in the modified polyolefin resin is preferably 0.1% by weight or more and more preferably 0.4% by weight or more. Thus, compatibility with the other components can be favorable. The upper limit is preferably 30% by weight or less and more preferably 20% by weight or less. With the introduction amount in the range above, the occurrence a graft unreacted substance can be inhibited. The graft weight can be determined by alkali titration or $^1$H-NMR.

The (meth)acrylate may be one type or a combination of two or more types. In the latter case, the blending ratio among the compounds is not limited to a particular ratio.

The method for obtaining the modified polyolefin resin from the polyolefin resin is not limited to a particular method and can be performed by a known method. In the following description, one or more types of compounds selected from the group consisting of the unsaturated carboxylic acid, the anhydride of the unsaturated carboxylic acid, and the derivative of the unsaturated carboxylic acid used in the modification and the (meth)acrylate or the like used as needed are collectively referred to as the "modifier."

Examples of the method for obtaining the modified polyolefin resin include a liquid method dissolving the modifier in a solvent such as toluene while heating, to which a radical generator is added; and a melt kneading method adding the modifier and the radical generator to an apparatus such as a Banbury mixer, a kneader, or an extruder to perform kneading. When two or more types of modifiers are used, these may be added collectively, or individual modifiers may be added in succession. When two or more types of modifiers are used, the blending ratio among the modifiers is not limited to a particular ratio.

In the modified polyolefin resin, each modifier may be introduced to the polyolefin resin, and the modifier is preferably introduced to the polyolefin resin through graft polymerization. When two or more kinds of modifiers are used, the order about which modifier is first graft polymerized to the polyolefin resin is not limited to a particular order.

In the graft polymerization reaction, a radical generator may be used. The radical generator can be selected from known ones as appropriate; organic peroxide-based compounds are preferred. Examples of the radical generator include di-t-butyl peroxide, dicumyl peroxide, t-butyl cumyl peroxide, benzoyl peroxide, dilauryl peroxide, cumene hydroperoxide, t-butyl hydroperoxide, 1,1-bis(t-butylperoxy)-3,5,5-trimethylcyclohexane, 1,1-bis(t-butylperoxy)-cyclohexane, cyclohexanone peroxide, t-butylperoxy benzoate, t-butylperoxy isobutylate, t-butylperoxy-3,5,5-trimethyl hexanoate, t-butylperoxy-2-ethylhexanoate, t-butylperoxy isopropyl carbonate, and cumylperoxy octoate. Among these, di-t-butyl peroxide and dilauryl peroxide are preferred.

The addition amount of the radical generator to the polyolefin resin is preferably 1% by weight or more and more preferably 3% by weight or more with respect to the total amount of the modifier used. The addition amount of the radical generator to the polyolefin resin is 1% by weight or more, whereby the graft rate can be retained. The upper limit of the addition amount is preferably 100% by weight or less and more preferably 50% by weight or less. Being 100% by weight or less is more economical.

The melting point (Tm) of the thermoplastic resin by a differential scanning calorimeter (DSC) is normally 50°C or more, 60°C or more, 110°C or more, 115°C or more, or 120°C or more, preferably 125°C or more, and more preferably 130°C or more. When the melting temperature is in the range above, thermal plasticization of the rubber composition can be inhibited. The upper limit is normally 200°C or less, preferably 180°C or less, and more preferably 150°C or less. Tm is preferably 50 to 180°C and more preferably 60 to 150°C, for example. In particular, Tm is 110°C or more, 115°C or more, or 120°C or more, whereby a rubber composition having a small elastic modulus change by temperature, having a high intermediate stress of a tensile characteristic, and having a moderate loss tangent can be obtained. From the viewpoint of obtaining the effect, Tm is more preferably 110 to 200°C, 115 to 200°C, 120 to 180°C, or 120 to 150°C.

The thermoplastic resin may be one type alone or be a combination of two or more types. In the latter case, the blending ratio among the resins is not limited to a particular ratio.

In the rubber additive composition, the mass ratio (C2/A) of the component (C2) to the component (A) is preferably 0.1 to 5, more preferably 0.2 to 4, and even more preferably 0.3 to 3. When (C2/A) is more than 5, the unique quality of being rubber may be lost. When (C2/A) is less than 0.1, addition of the component (C2) does not necessarily

contribute to reinforcement of the rubber composition.

The rubber additive composition of the present invention can be prepared by mixing the components together. In the mixing, they may be stirred. The anion-modified cellulose is normally prepared in the form of being dispersed in a solvent such as water, and thus in the mixing, the water dispersion liquid of the anion-modified cellulose can be added to the system as it is and be mixed (preferably mixed with stirring). The components may be added collectively or be added in succession.

[Optional Components]

The rubber additive composition may contain other components (a cross-linking agent and a preservative, for example) apart from the components (A) to (C). Examples of the cross-lining agent include, but are not limited to, compounds containing a cross-linking group such as an isocyanate group, a carbodiimide group, an oxazoline group, an aziridine group, an epoxy group, or a polyfunctional cation and compounds containing multivalent metal.

[2. Water Content and Bulk Density after Pulverization]

The rubber additive composition of the present invention may contain water contained in the water dispersion liquid of the anion-modified cellulose and other components as it is; the water content is preferably 50% by mass or less. With the water content in the range above, the rubber composition can be produced by dry blending.

The water content of a dry product is normally 50% by mass or less and preferably 5 to 20% by mass per the dry product. In the present specification, the water content of the dry product can be measured using a constant temperature dryer.

Examples of the method for producing the dry product include a method removing at least part of water contained in a mixture of the components by drying or the like.

The method of drying is not limited to a particular method; examples thereof include spray drying, pressing, air drying, hot-air drying, and vacuum drying. Examples of a drying apparatus include an oven, a continuous tunnel drying apparatus, a band drying apparatus, a vertical drying apparatus, a vertical turbo drying apparatus, a multistage disc drying apparatus, a ventilation drying apparatus, a rotary drying apparatus, an airflow drying apparatus, a spray dryer drying apparatus, a spray drying apparatus, a cylinder drying apparatus, a drum drying apparatus, a screw conveyer drying apparatus, a heating pipe-equipped rotary drying apparatus, a vibration transport drying apparatus, and a batch drying apparatus (a box drying apparatus, a ventilation drying apparatus, a vacuum box drying apparatus, or a stirring drying apparatus, for example). Among them, the drum drying apparatus is preferred because it can directly supply heat energy to an object to be dried uniformly and thus has high energy efficiency and can immediately collect the dry product without applying more heat than needed.

These drying apparatuses may be used singly or be used with two or more combined with each other.

The rubber additive composition of the present invention is preferably a dry pulverized product. The bulk density of the pulverized product is normally 0.1 to 1 $g/cm^3$ and preferably 0.1 to 0.5 $g/cm^3$. In the present specification, the bulk density of the pulverized product can be measured using a graduated cylinder.

Examples of the method for producing the dry pulverized product include a method pulverizing the dry product obtained after the drying described above. The method for pulverizing the dry product is not limited to a particular method and can be performed using a known pulverizer. Examples of the known pulverizer include cutting type mills: Easy Cut Mill (manufactured by Kalita Co., Ltd.), Mesh Mill (manufactured by Horai Co., Ltd.), Atoms (manufactured by Yamamoto Hyakuma Mfg. Co., Ltd.), Knife Mill (manufactured by Pallmann), Cutter Mill (manufactured by Tokyo Atomizer M.F.G. Co., Ltd.), CS Cutter (manufactured by Mitsui Mining Co., Ltd.), Rotary Cutter Mill (manufactured by Nara Machinery Co. Ltd.), Pulp Coarse Crusher (manufactured by Zuiko Corporation), and Shredder (manufactured by Shinko Pantec Co., Ltd.); hammer type mills: Jaw Crusher (manufactured by Makino Corporation) and Hammer Crusher (manufactured by Makino Mfg. Co., Ltd.); impact type mills: Pulverizer (manufactured by Hosokawa Micron Corporation), Fine Impact Mill (manufactured by Hosokawa Micron Corporation), Super Micron Mill (manufactured by Hosokawa Micron Corporation), Inomizer (manufactured by Hosokawa Micron Corporation), Fine Mill (manufactured by Nippon Pneumatic Mfg. Co., Ltd.), CUM Type Centrifugal Mill (manufactured by Mitsui Mining Co., Ltd.), Exceed Mill (manufactured by Makino Mfg. Co., Ltd.), Ultraplex (manufactured by Makino Mfg. Co., Ltd.), Contraplex (manufactured by Makino Mfg. Co., Ltd.), Kolloplex (manufactured by Makino Mfg. Co., Ltd.), Sample Mill (manufactured by Seishin Enterprise Co., Ltd.), Bantam Mill (manufactured by Seishin Enterprise Co., Ltd.), Atomizer (manufactured by Seishin Enterprise Co., Ltd.), Tornado Mill (manufactured by Nikkiso Co., Ltd.), Nea Mill (manufactured by Dalton Corporation), HT Type Pulverizer (manufactured by Horai Co., Ltd.), Jiyu Mill (manufactured by Nara Machinery Co. Ltd.), New Cosmomizer (manufactured by Nara Machinery Co. Ltd.), Gather Mill (manufactured by Nishimura Machine Works Co., Ltd.), Spar Powder Mill (manufactured by Nishimura Machine Works Co., Ltd.), Blade Mill (manufactured by Nisshin Engineering Inc.), Super Rotor (manufactured by Nisshin Engineering Inc.), Npa Crusher (manufactured by Misho Industry Co., Ltd.), Wiley Mill (manufactured

by Miki Seisakusho Co., Ltd.), Pulp Crusher (manufactured by Zuiko Corporation), Jacobson Crusher (manufactured by Shinko Pantec Co., Ltd.), and Universal Mill (manufactured by Tokuju Corporation), airflow type mills: CGS Type Jet Mill (manufactured by Mitsui Mining Co., Ltd.), Micron Jet (manufactured by Hosokawa Micron Corporation), Counter Jet Mill (manufactured by Hosokawa Micron Corporation), Cross Jet Mill (manufactured by Kurimoto Ltd.), Supersonic Jet Mill Nippon Pneumatic Mfg. Co., Ltd.), Current Jet (manufactured by Nisshin Engineering Inc.), Jet Mill (manufactured by Misho Industry Co., Ltd.), Ebara Jet Micronizer (manufactured by Ebara Corporation), Ebara Triad Jet (manufactured by Ebara Corporation), Ceren Miller (manufactured by Masuko Sangyo Co., Ltd.) New Microcyclomat (manufactured by Masuno Seisakusho Ltd.), Kryptron (manufactured by Kawasaki Heavy Industries, Ltd.); and vertical roller mills: Vertical Roller Mill (manufactured by Scenion Inc.), Vertical Roller Mill (manufactured, by Schaeffler Japan Co., Ltd.), Roller Mill (manufactured by Kotobuki Engineering & Manufacturing Co., Ltd.), VX Mill (manufactured by Kurimoto Ltd.), KVM Type Vertical Mill (manufactured by EarthTechnica Co., LTD.), IS Mill (manufactured by IHI Plant Engineering Corporation), and Turbo Mill (manufactured by Freund Corporation).

Among these, because of excellence in pulverizability, preferred are Tornado Mill (manufactured by Nikkiso Co., Ltd.), Blade Mill (manufactured by Nisshin Engineering Inc.), Jiyu Mill (manufactured by Nara Machinery Co. Ltd.), Turbo Mill (manufactured by Freund Corporation), and Easy Cut Mill (manufactured by Kalita Co., Ltd.).

[2. Method for Producing Rubber additive composition]

The method for producing the rubber additive composition is not limited to a particular method; preferred is a method including Steps 1 and 2 or Steps 1 to 3 described below.

[2-1. Step 1]

In Step 1, at least the components (A) and (B) are mixed together to obtain a mixture. The mixture normally contains a hydrophobized anion-modified cellulose component. The anion-modified cellulose is normally prepared in the form of being dispersed in a solvent such as water, and the mixing may be performed in the presence of the solvent such as water remaining in the preparation of the anion-modified cellulose, in which stirring may be performed as needed. In the mixing, another raw material, or preferably a raw material containing the component (C1) and/or the component (C2), is preferably further mixed. (C1) is further mixed, whereby the dispersion of cellulose can be facilitated, which is preferred. (C1) and (C2) are mixed, whereby a mixed dry product to be obtained in Step 2 is dry blended into the rubber component to obtain a rubber composition having a good balance among breaking elongation, breaking strength, a modulus in a low-to-intermediate range, and hardness. The components may be added collectively or be added in succession.

[2-2. Step 2]

In Step 2, the mixture is dried to obtain the mixed dry product. The drying is performed such that the water content of a composition to be obtained after the drying will be preferably 50% by mass or less and more preferably 5 to 20% by mass. The method for drying the dry product is as described above.

[2-3. Step 3]

In Step 3, the component (C2) is blended into the mixed dry product obtained in Step 2. When the component (C2) is not added in Step 1, Step 3 is performed, whereby (C2) can be added. (C2) in this case is preferably a thermoplastic resin with a melting point of 110°C or more. In this case, a rubber composition having an excellent balance among breaking elongation, breaking strength, a modulus in a low-to-intermediate range, hardness, an elastic modulus change by temperature, intermediate stress of a tensile characteristic, loss tangent, and the like can be obtained.

In blending the component (C2), stirring and heating may be performed as needed. In the blending, the rubber component may be blended together with the component (C2) and be subjected to kneading treatment as it is. The kneading treatment is the same as that described in the method for producing the rubber composition. Before blending or after blending the rubber component, washing treatment of the composition after the kneading treatment may be performed as needed. The washing treatment, which may be treatment bringing a solvent containing only water into contact with the composition, is preferably treatment bringing a solvent containing a metal salt or an acidic solvent into contact therewith. By the washing treatment described above, ionic bonding formed between the components (A) and (B) can be dissociated, and the properties of the rubber composition can be adjusted.

[3. Rubber Composition]

The rubber composition of the present invention contains a kneaded product of the rubber component and the rubber additive composition described above. The rubber additive composition is as described above.
The rubber component refers to a raw material of rubber that cross-links to become rubber. Examples of the rubber component include rubber components for natural rubber and rubber components for synthetic rubber.
Examples of the rubber components for natural rubber include natural rubber (NR) in a narrow sense without any chemical modification; chemically modified natural rubber such as chlorinated natural rubber, chlorosulfonated natural rubber, and epoxidated natural rubber; hydrogenated natural rubber; and deproteinized natural rubber.
Examples of the rubber components for synthetic rubber include diene-based rubber such as butadiene rubber (BR), styrene-butadiene copolymer rubber (SBR), isoprene rubber (IR), acrylonitrile-butadiene rubber (NBR), chloroprene rubber (CR), styrene-isoprene copolymer rubber, styrene-isoprene-butadiene copolymer rubber, isoprene-butadiene copolymer rubber, and ethylene-propylene rubber (ethylene-propylene-diene rubber: EPM or EPDM); and non-diene-based rubber such as butyl rubber (IIR), acrylic rubber (ACM), epichlorohydrin rubber (CO or ECO), fluorine rubber (FKM), silicone rubber (Q), urethan rubber (U), and chlorosulfonated polyethylene (CSM). Among these, diene-based rubber is preferred, and diene-based natural rubber is more preferred.
The rubber component may be one type alone or be a combination of two or more types.
The mass ratio between the rubber component and the composition to be added is such that the component (A) is preferably 1 part by mass or more, more preferably 5 parts by mass or more, and even more preferably 10 parts by mass or more with respect to 100 parts by mass of the rubber component. With the mass ratio in the range above, a tensile strength improvement effect can sufficiently be produced. The upper limit is preferably 50 parts by mass or less, preferably 40 parts by mass or less, and even more preferably 30 parts by mass or less. With the upper limit in the range above, processability in the production step can be retained. Consequently, the component (A) is preferably 1 to 50 parts by mass, more preferably 5 to 40 parts by mass, and even more preferably 10 to 30 parts by mass.
The rubber composition of the present invention may contain a blending agent such as a reinforcing agent (carbon black or silica, for example), a silane coupling agent, a filler, a vulcanizer, a vulcanization accelerator, a vulcanization acceleration adjuvant (zinc oxide or stearic acid, for example), oil, a curing resin, wax, an antioxidant, or a coloring agent apart from the rubber component and the rubber additive composition. The addition amount of these may be determined as appropriate in accordance with the type or the like of the blending agent and is not limited to a particular amount.
When the rubber composition is an unvulcanized rubber composition or a final product, a cross-linking agent and the vulcanization accelerator are preferably contained. Examples of the cross-linking agent include sulfur, halogenated sulfur, organic peroxides, quinone dioximes, organic multivalent amine compounds, and alkyl phenol resins having a methylol group. Among these, sulfur is preferred. The content of the cross-linking agent is preferably 1.0 part by mass or more, more preferably 1.5 parts by mass or more, and even more preferably 1.7 parts by mass or more with respect to 100 parts by mass of the rubber component. The upper limit is preferably 10 parts by mass or less, more preferably 7 parts by mass or less, and even more preferably 5 parts by mass or less.
Examples of the vulcanization accelerator include N-t-butyl-2-benzothiazolesulfenamide and N-oxydiethylene-2-benzothiazolylsulfenamide. The content of the vulcanization accelerator is preferably 0.1 part by mass or more, more preferably 0.3 part by mass or more, and even more preferably 0.4 part by mass or more with respect to 100 parts by mass of the rubber component. The upper limit is preferably 5 parts by mass or less, more preferably 3 parts by mass or less, and even more preferably 2 parts by mass or less.

[4. Method for Producing Rubber Composition]

The method for producing the rubber composition of the present invention includes a step of kneading the rubber component and the rubber additive composition.
In the step of kneading, although the raw materials may be added collectively to the rubber component, when the composition does not contain the component (C2), the step of kneading preferably includes mixing the component (A) and (B) together to obtain a mixture, drying the mixture to obtain a mixed dry product, and kneading the mixed dry product, the component (C2), and the rubber component together. These steps are similar to Steps 1 to 3 described in the item of the method for producing the rubber additive composition except that kneading the rubber component together with the component (C) in Step 3.
When the step of kneading is performed, the kneading of the components including the rubber component may be performed according to public knowledge. Open kneaders such as a two roll mill and a three roll mill and closed kneaders such as an intermesh type Banbury mixer, a tangential type Banbury mixer, and a pressurizing kneader can be used, for example. A step through multi-steps of kneading can also be employed; kneading is performed by a closed kneader in a first step, then rekneading can be performed by an open kneader, for example.

The kneading temperature may be about normal temperature (about 15 to 30°C, for example) or be heated at a high temperature to some extent. The upper limit of the temperature is normally 200°C or less, preferably 180°C or less, and more preferably 160°C or less, for example. The lower limit of the temperature is normally 15°C or more, preferably 20°C or more, and more preferably 30°C or more. The kneading temperature is preferably 15 to 200°C, more preferably 20 to 180°C, and even more preferably 30 to 160°C.

After the end of the kneading, molding may be performed as needed. Examples of the molding include die molding, injection molding, extrusion molding, blow molding, and foaming molding; an apparatus may be selected as appropriate in accordance with the shape, the use, and the method of molding of a final product.

After the end of the kneading, or preferably after the molding, the rubber composition is preferably further heated. When the rubber composition contains the cross-linking agent (preferably the cross-liking agent and the vulcanization accelerator), cross-linking (vulcanization) treatment is performed by the heating. When the rubber composition does not contain the cross-liking agent or the vulcanization accelerator as well, if the cross-liking agent and the vulcanization accelerator are added before the heating, a similar effect can be obtained. The heating temperature is preferably 150°C or more, and the upper limit is preferably 200°C or less and more preferably 180°C or less. Consequently, the heating temperature is preferably about 150 to 200°C and more preferably about 150 to 180°C. Examples of a heating apparatus include vulcanizers for mold vulcanization, can vulcanization, and continuous vulcanization.

Before making the kneaded product a final product, finishing treatment may be performed as needed. Examples of the finishing treatment include polishing, surface treatment, rip finishing, rip cutting, and chlorine treatment; only one of these pieces of treatment may be performed, or a combination of two or more may be performed.

[Examples]

The following describes the present invention in more detail with reference to examples. The following examples are for suitably describing the present invention and do not limit the present invention. The methods for measuring property values and the like are the methods of measurement described above unless otherwise described. The parts represent parts by weight unless otherwise specified.

[Hardness]: Conforming to ISO M 6518, rubber hardness (Shore A) was measured.

[Stress (MPa) at 50 or 100% Strain]: Measurement was performed in accordance with JIS K 6251 (2017) "Rubber, vulcanized or thermoplastic - Determination of tensile stress-strain properties".

[Breaking Stress (MPa)] Measurement was performed in accordance with JIS K 6251 (2017) "Rubber, vulcanized or thermoplastic - Determination of tensile stress-strain properties".

[Breaking Elongation (%)]: Measurement was performed in accordance with JIS K 6251 (2017) "Rubber, vulcanized or thermoplastic - Determination of tensile stress-strain properties".

[Breaking Strength (MPa)]: Measurement was performed in accordance with JIS K 6251 (2017) "Rubber, vulcanized or thermoplastic - Determination of tensile stress-strain properties".

[Breaking Elongation (%)]: Measurement was performed in accordance with JIS·K 6251 (2017) "Rubber, vulcanized or thermoplastic - Determination of tensile stress-strain properties".

[Stress (MPa) at 50 or 100% Strain]: Measurement was performed in accordance with JIS K 6251 (2017) "Rubber, vulcanized or thermoplastic - Determination of tensile stress-strain properties".

[Elastic Modulus (MPa)]: In accordance with JIS K7244 "Plastics - Determination of dynamic mechanical properties", a sample was cut out to a certain test piece, a storage elastic modulus (E') was measured in a nitrogen atmosphere while the temperature was changed from -100°C to +250°C using a dynamic viscoelasticity measurement apparatus (model: DMA7100 manufactured by Hitachi High-Tech Science Corporation).

[Loss Factor (tan $\delta$)]: In accordance with JIS K7244 "Plastics - Determination of dynamic mechanical properties", a sample was cut out to a certain test piece, a loss factor (tan $\delta$) at 100°C was measured in a nitrogen atmosphere while the temperature was changed from -100°C to +250°C using a dynamic viscoelasticity measurement apparatus (model: DMA Q800 manufactured by TA Instruments).

(Production Example 1: Preparation of Oxidized Cellulose)

Bleached unbeaten kraft pulp derived from conifer wood (whiteness: 85%) in an amount of 5.00 g (bone-dried) was added to 500 ml of an aqueous solution dissolving 39 mg (0.05 mmol with respect to cellulose of a bone-dried mass of 1 g) of TEMPO (Sigma Aldrich) and 514 mg (1.0 mmol with respect to cellulose of a bone-dried mass of 1 g) of sodium bromide, and the aqueous solution was stirred until the pulp was uniformly dispersed. An aqueous sodium hypochlorite solution was added to the reaction system such that sodium hypochlorite would be 5.5 mmol/g, and an oxidation reaction was started at room temperature. During the reaction, pH in the system reduced; a 3 M aqueous sodium hydroxide solution was added in succession to adjust pH to 10. At a point in time when sodium hypochlorite was consumed, and pH in the system became not to change, the reaction was ended. The mixture after the reaction was filtered with a glass

filter to be separated, and the separated product was sufficiently washed with water to obtain oxidized cellulose. The yield at this point was 90%, the time required for the oxidation reaction was 90 minutes, and the carboxy group amount was 1.42 mmol/g.

(Production Example 2: Preparation of Carboxymethylated Cellulose)

To a stirrer capable of mixing pulp, pulp (NBKP (conifer wood bleached kraft pulp) manufactured by Nippon Paper Industries Co., Ltd.) in a dry mass of 200 g and sodium hydroxide in a dry mass of 111 g (2.25 times moles per anhydrous glucose residue of the starting raw material) were added, and water was added thereto so as to give a pulp solid content of 20% (w/v). Subsequently, after stirring at 30°C for 30 minutes, 216 g (in terms of active ingredient, 1.5 times moles per glucose residue of the pulp) of monochloro sodium acetate was added thereto. After stirring for 30 minutes, the temperature was raised up to 70°C, and the mixture was stirred for 1 hour. Subsequently, the reaction product was taken out, was neutralized, and was washed to obtain carboxymethylated cellulose with a carboxymethyl substitution degree per glucose unit of 0.25.

(Production Example 3: Preparation of Modified Polyolefin Resin (1))

In a four-neck flask equipped with a stirrer, a cooling pipe, and a dropping funnel, 100 parts of a propylene-1-butene copolymer (propylene component: 70 mol%, 1-butene component: 30 mol%, weight average molecular weight: 200,000, and Tm = 75°C) was dissolved in 400 g of toluene while heating. While the mixture was kneaded while holding the intra-system temperature at 110°C, 4.5 parts of maleic anhydride and 3.0 parts of di-t-butyl peroxide were each added dropwise thereto over 3 hours and were further reacted for 1 hour. After the reaction, the system was cooled to room temperature, and then the reaction product was charged into a large excess amount of acetone to be purified and to obtain a modified polyolefin resin (1) with a weight average molecular weight of 80,000, Tm of 75°C, and a maleic anhydride graft weight of 3.0% by weight.

The maleic anhydride graft weight was measured by alkali titration. The same applies to the following examples.

Subsequently, 100 g of the obtained modified polyolefin resin (1), 30 g of toluene, and 100 g of ethylene glycol monobutyl ether were added to a four-neck flask equipped with a stirrer, a cooling pipe, a thermometer, and a funnel, and the mixture was kneaded for 30 minutes with the flask inside temperature set at 85°C. Next, 5 g of N,N-dimethyl ethanolamine (DMEA) was added thereto, and the mixture was kneaded for 60 minutes with the flask inside temperature set at 85°C. Subsequently, 290 g of deionized water at 90°C was added over 60 minutes. Subsequently, part of toluene and ethylene glycol monobutyl ether was removed under reduced pressure. Subsequently, the mixture was cooled to room temperature while being kneaded and was adjusted to have a solid content of 30% by weight with deionized water. In this way, a water dispersion composition (1) containing the modified polyolefin resin (1) was obtained. Tm of the dry product of the water dispersion composition (1) was 75°C.

(Production Example 4: Preparation of Modified Polyolefin Resin (2))

In a four-neck flask equipped with a stirrer, a cooling pipe, and a dropping funnel, 100 parts of a propylene-1-butene copolymer (propylene component: 90 mol%, 1-butene component: 10 mol%, weight average molecular weight: 450,000, and Tm = 100°C) was dissolved in 400 g of toluene while heating. While the mixture was kneaded while holding the intra-system temperature at 110°C, 3.0 parts of maleic anhydride and 3.0 parts of di-t-butyl peroxide were each added dropwise thereto over 3 hours and were further reacted for 1 hour. After the reaction, the system was cooled to room temperature, and then the reaction product was charged into a large excess amount of acetone to be purified and to obtain a modified polyolefin resin (2) with a weight average molecular weight of 100,000, Tm of 100°C, and a maleic anhydride graft weight of 2.0% by weight.

Using the obtained modified olefin resin (2), a water dispersion composition (2) was prepared by the same method as Production Example 3 except that the addition amount of DMEA of Production Example 3 was changed to 7 g. Tm of the dry product of the water dispersion composition (2) was 95°C.

(Production Example 5: Preparation of Modified Polyolefin Resin (3))

In a four-neck flask equipped with a stirrer, a cooling pipe, and a dropping funnel, 100 parts of an α-olefin copolymer (propylene component: 98 mol%, ethylene component: 2 mol%, and Tm = 145°C) was dissolved in 400 g of toluene while heating. While the mixture was kneaded while holding the intra-system temperature at 110°C, 8.0 parts of maleic anhydride, 8.0 parts of lauryl methacrylate, and 3.0 parts of di-t-butyl peroxide were each added dropwise thereto over 3 hours and were further reacted for 1 hour. After the reaction, the system was cooled to room temperature, and then the reaction product was charged into a large excess amount of acetone to be purified and to obtain a modified

polyolefin (3) with a weight average molecular weight of 60,000, Tm of 145°C, and a maleic anhydride and lauryl methacrylate graft weights of 3.5% by weight and 3.6% by weight, respectively.

The lauryl methacrylate graft weight was measured by $^1$H-NMR. The same applies to the following examples.

(Production Example 6: Preparation of Modified Polyolefin Resin (4))

In a four-neck flask equipped with a stirrer, a cooling pipe, and a dropping funnel, 100 parts of an α-olefin copolymer (propylene component: 97 mol%, ethylene component: 3 mol%, and Tm = 125°C) was dissolved in 400 g of toluene while heating. While the mixture was kneaded while holding the intra-system temperature at 110°C, 8.0 parts of maleic anhydride, 8.0 parts of lauryl methacrylate, and 8.0 parts of di-t-butyl peroxide were each added dropwise thereto over 3 hours and were further reacted for 1 hour. After the reaction, the system was cooled to room temperature, and then the reaction product was charged into a large excess amount of acetone to be purified and to obtain a modified polyolefin (4) with a weight average molecular weight of 70,000, Tm of 125°C, and a maleic anhydride and lauryl methacrylate graft weights of 4.5% by weight and 4.7% by weight, respectively.

(Production Example 7: Preparation of Modified Polyolefin Resin (5))

In a four-neck flask equipped with a stirrer, a cooling pipe, and a dropping funnel, 100 parts of a propylene-1-butene copolymer (propylene component: 95 mol%, 1-butene component: 5 mol%, weight average molecular weight: 450,000, and Tm = 115°C) was dissolved in 400 g of toluene while heating. While the mixture was kneaded while holding the intra-system temperature at 110°C, 3.0 parts of maleic anhydride and 3.0 parts of di-t-butyl peroxide were each added dropwise thereto over 3 hours and were further reacted for 1 hour. After the reaction, the system was cooled to room temperature, and then the reaction product was charged into a large excess amount of acetone to be purified and to obtain a modified polyolefin resin (5) with a weight average molecular weight of 100,000, Tm of 115°C, and a maleic anhydride graft weight of 2.0% by weight.

(Example 1)

Added were 500 g of a water dispersion liquid with a solid content concentration of the oxidized cellulose obtained in Production Example 1 of 1.00% (w/v), 7.1 g of JEFFAMINE (registered trademark) M-2070 (manufactured by Huntsman Corporation, molecular weight: 2,000) as a hydrophobizing agent, and 2.8 g of dioleyl dimethyl ammonium chloride, and the mixture was stirred at 3,000 rpm for 15 minutes using a homo disperser (product name: "High-Speed Disperser Homogenizing Disper" manufactured by Primix Corporation) to prepare a water dispersed composition (1). The water dispersed composition (1) was oven-dried at 70°C for 1 day to prepare a dry product (1) with a water content of 7%.

The dry product (1) was roughly pulverized with a compact mill (product name "Easy Cut Mill EG-45" manufactured by Kalita Co., Ltd.) to prepare a pulverized product (1). The pulverized product (1) and a rubber component (ethylene-propylene-diene rubber, product name "EP24" manufactured by JSR Corporation) were blended with each other so as to have 5 parts of a fiber component with respect to 100 parts of the rubber component and were kneaded at 160°C for 10 minutes using a closed biaxial kneader. Dicumyl peroxide (3 parts with respect to the rubber component) was added to 60 g of the kneaded product, and the mixture was kneaded at 30°C and was then cross-linked and molded at 170°C for 15 minutes to obtain a rubber composition (1). Using the obtained rubber composition (1), evaluation tests on the hardness, the stress at 50 or 100% strain, the breaking stress, and the breaking elongation were conducted. Table 1 lists results.

(Examples 2 to 19 and Comparative Examples 1 to 3)

Rubber compositions were obtained in the same manner as Example 1 except that the raw materials used for the preparation of the rubber additive composition were changed to those in Table 1 or Table 2, that when the component (B) and the component (C) used in the examples were used, they were stirred together with the component (A) on the same condition as that of Example 1 using a homo disperser, that the component (B) and the component (C) were directly added to the rubber component for Comparative Examples 1 and 2, and that only the rubber component was kneaded on the same condition as that of Example 1 for Comparative Example 3, and the various kinds of evaluation tests were conducted. Table 1 or Table 2 lists results.

[Table 1]

Table 1

| | | | Examples | | | | | | | | | | | | | | | |
|---|---|---|---|---|---|---|---|---|---|---|---|---|---|---|---|---|---|---|
| | | | 1 | 2 | 3 | 4 | 5 | 6 | 7 | 8 | 9 | 10 | 11 | 12 | 13 | 14 | 15 | 16 |
| Component A | | | Oxidized celluloase | | | | | | | | | | | Carboxymethylated cellulose | | | | |
| Component B | B1 | *1JEFFAMINE M-2070(g) | 71 | 7.1 | 7.1 | 71 | 7.1 | 7.1 | 7.1 | 7,1 | 71 | 71 | 7,1 | 7,1 | 71 | 7,1 | 7,1 | 7,1 |
| | 82 | *2Dioleyl dimethyl ammonium chloride (g) | 2,8 | 2.8 | - | 2.8 | - | 2.8 | - | 2.8 | 2.8 | 2.8 | 28 | 2.8 | 2.8 | - | 2.8 | - |
| | | Oleylamine (g) | - | - | 1.0 | - | 1.0 | - | 1.0 | - | - | - | - | - | - | 1.0 | - | 1.0 |
| Comonent C | C1 | *3Polyethylene glycol (g) | - | 3 | 3 | - | - | - | - | - | - | - | - | - | 3 | 3 | - | - |
| | | *4 Fillanol PA-07SF (g) | - | - | - | 3 | 3 | 3 | 3 | - | 3 | 3 | 3 | - | - | - | 3 | 3 |
| | C2 | Modified polyolefin resin (1)(g) | - | 5 | 5 | 5 | 5 | - | - | - | - | - | - | - | 5 | 5 | 5 | 5 |
| | | Modified polyolefin resin (2)(g) | - | - | - | - | - | 5 | 5 | 5 | - | - | - | - | - | - | - | - |
| | | Modified polyolefin resin (3)(g) | - | - | | | - | - | - | - | - | 5 | | | - | - | - | - |
| | | Modified polyolefin resin (4)(g) | - | - | - | - | - | - | - | - | - | - | 5 | - | - | - | - | - |
| Rubber additive | | Water content (%) | 7 | 8 | 7 | 7 | 7 | 8 | 7 | 6 | 7 | 7 | 8 | 7 | 8 | 8 | 8 | 7 |
| | | Bulk density (g/cm$^3$) | 0.4 | 02 | 0.3 | 02 | 0.3 | 0.2 | 0.3 | 0.4 | 0.3 | 9.2 | 0.2 | 0.5 | 02 | 0.3 | 0.2 | 0.3 |
| Rubber properties | Hardness | | 50 | 52 | 51 | 53 | 51 | 53 | 52 | 53 | 51 | 53 | 52 | 51 | 52 | 51 | 52 | 52 |
| | Stress at 50% strain (MPa) | | 0.9 | 12 | 1.2 | 1.2 | 1.2 | 1.1 | 13 | 12 | 1.2 | 1.2 | 1.2 | 1.1 | 1.2 | 1.2 | 13 | 12 |
| | Stress at 100% strain (MPa) | | 13 | 1.7 | 1.6 | 1.7 | 1.6 | 1.8 | 1.7 | 17 | 1.6 | 1.7 | 1.6 | 15 | 1.7 | 1.7 | 1.7 | 1.7 |
| | Breaking stress (MPa) | | 2.0 | 3.3 | 3.3 | 3.2 | 3.1 | 3.4 | 3.4 | 3.2 | 3.3 | 3.2 | 3.2 | 2.2 | 3.2 | 3.0 | 3.2 | 3.2 |
| | Breaking eleongation (%) | | 210 | 247 | 243 | 243 | 233 | 245 | 235 | 231 | 239 | 241 | 246 | 203 | 256 | 233 | 250 | 238 |

[Table 2]

Table 2

| | | | Examples | | | Comparative Examples | | |
|---|---|---|---|---|---|---|---|---|
| | | | 17 | 18 | 19 | 1 | 2 | 3 |
| Component A | | | Oxidized celluloase | | Carboxymethylated cellulose | Absent | | |
| Component 8 | B1 | "JEFFAMINE M-2070(g) | 14.2 | 14.2 | 14.2 | 14.2 | 7.1 | |
| | B2 | Dioleyl dimethyl ammonium chloride (g) | - | - | - | - | 2.8 | - |
| Component C | C1 | Polyethylene glycol (g) | - | 3 | 3 | 3 | 3 | - |
| | C2 | Modifled polyolefin resin (1) (g) | - | 5 | 5 | 5 | 5 | - |
| Rubber additive | | Water content (%) | 9 | 8 | 9 | - | - | - |
| | | Bulk density (g/cm$^3$) | 0.7 | 0.5 | 0.6 | - | - | - |
| Rubber properties | Hardness | | 47 | 49 | 49 | 41 | 45 | 51 |
| | Stress at 50% strain (MPa) | | 0.8 | 0.9 | 0.9 | 0.7 | 0.9 | 1.0 |
| | Stress at 100% strain (MPa) | | 1.1 | 1.2 | 1.2 | 1.0 | 1.2 | - |
| | Breaking stress (MPa) | | 1.8 | 1.8 | 1.7 | 1.4 | 1.7 | 1.2 |
| | Breaking elongation (%) | | 201 | 185 | 198 | 176 | 188 | 71 |

(Footnotes of Tables 1 and 2)

*1 JEFFAMINE M-2070 (manufactured by Huntsman Corporation; the polyether amine represented by General Formula (11) (In the formula, x = 6, y = 35, and EO/PO = 31:10)
*2 Dioleyl dimethyl ammonium chloride (manufactured by NOF Corporation, dioleyl dimethyl ammonium chloride (diluted with water and IPA))
*3 Polyethylene glycol (molecular weight: 600, and EO number of moles added: 6 to 14)
*4 Fillanol PA-075F (manufactured by NOF Corporation; a polyalkylene glycol derivative, a polymer amine)

The following is revealed from Table 1 and Table 2. Comparative Examples 1 and 2, in which only the component (B) was added, were poor in the hardness and the breaking stress, and Comparative Example 3, in which neither the component (A) nor the component (B) was added, was poor in the breaking stress and the breaking elongation, whereas when the rubber additive composition of the present invention was used, the characteristics of the rubber composition produced by dry blending were favorable with a good balance. In particular, Examples 1 to 16, which contained both (B1) and (B2), were more favorable in all of the breaking elongation, the breaking strength, the modulus, and the hardness than Examples 17 to 19, which contained only (B1). When the surfactant and the modified polyolefin resin were blended, hardening reinforcement performance further improved (refer to Examples 2 to 11 and 13 to 16).

(Example 20)

Added were 500 g of a water dispersion liquid with a solid content concentration of the oxidized cellulose obtained in Production Example 1 of 1.00% (w/v), 7.1 g of JEFFAMINE (registered trademark) M-2070 (manufactured by Huntsman Corporation, molecular weight: 2,000) as a hydrophobizing agent, 2.8 g of Cation 2-OLR (manufactured

by NOF Corporation, dioleyl dimethyl ammonium chloride (diluted with water and IPA)), and 3.0 g of Fillanol PA-075F (manufactured by NOF Corporation, a polymer amine compound) as a dispersant, and the mixture was stirred at 3,000 rpm for 15 minutes using a homo disperser (product name: "High-Speed Disperser Homogenizing Disper" manufactured by Primix Corporation). The obtained hydrophobized oxidized pulp composition (hydrophobized TOP) was oven-dried at 70°C for 24 hours to obtain a dry mixture. The water content of the dry mixture was 7%.

The dry mixture was roughly pulverized with a compact mill (product name "Easy Cut Mill EG-45" manufactured by Kalita Co., Ltd.) to prepare a pulverized product. The bulk density of the pulverized product was 0.61 g/cm$^3$. A rubber component (ethylene-propylene-diene rubber, product name "EP24" manufactured by JSR Corporation) and the modified polyolefin (3) obtained in Production Example 5 were blended into the pulverized product. The blending amount was adjusted so as to have 10 parts of a fiber component with respect to 100 parts of the rubber component, with 10 parts of the modified polyolefin. These were kneaded at 160°C for 5 minutes using a closed biaxial kneader to obtain a kneaded product. Dicumyl peroxide (3 parts with respect to the rubber component) was added to 60 g of the kneaded product, and the mixture was kneaded at 30°C and was then cross-linked and moldedat 170°C for 15 minutes to obtain a rubber composition. Using the obtained rubber composition, evaluation tests on the breaking strength, the breaking elongation, the stress at 50 or 100% strain, the elastic modulus, and the tan δ were conducted. Table 3 lists results.

(Examples 21 to 25)

Rubber compositions were obtained in the same manner as Example 20 except that the raw materials used for the preparation of the rubber additive composition and their blended amounts were changed to those listed in Table 3, and the various kinds of evaluation tests were conducted. Table 3 lists results.

[Table 3]

Table 3

| | | Composition | | | | | Tensite characteristics | | | | Elastic modulus (MPa) | | | tanδ |
|---|---|---|---|---|---|---|---|---|---|---|---|---|---|---|
| | | A+B | B | C | Meting point of C | E | Breaking strength (MPa) | Breaking elongation (%) | M50 (MPa) | M100 (MPa) | 30°C | 100°C | Reduction rate | 100°C |
| Examples | 20 | Hydrophobized TOP | JEF-M2070 Cation 2-OLR | Modified polyoletin 3 | 145 | Fillanol PA-075F | 41 | 332 | 1.5 | 1.9 | 9.7 | 7.6 | 22% | 0064 |
| | 21 | Hydrophobized TOP | JEF-M2070 Cation 2-OLR | Modified polyolefin 4 | 125 | Fillanol PA-075F | 42 | 34.0 | 1.6 | 1.9 | 9.1 | 6.7 | 26% | 0072 |
| | 22 | Hydrophobized TOP | JEf-M2070 Cation 2-OLR | Modified polyolefin 5 | 115 | Fulanol PA-075F | 42 | 338 | 1.5 | 1.8 | 8.4 | 5.3 | 37% | 0.071 |
| | 23 | Hydrophobized CM pulp | JEF-M2070 Cation 2-OLR | Modified polyolefinin 3 | 145 | Fianol PA-075F | 3.7 | 297 | 1.5 | 1.9 | 8.3 | 6.9 | 17% | 0 075 |
| | 24 | Hydrophobized TOP | JEF-M2070 Cation 2-OLR | Modified polyolefin 2 | 100 | Filanol PA-075F | 4.4 | 336 | 1.6 | 1.9 | 8.1 | 41 | 49% | 0.080 |
| | 25 | Hydrophobized CM pulp | JEP-M2070 Cation 2-OLR | Modified polyolefin 2 | 100 | Filanol PA-075F | 3.7 | 302 | 1.4 | 1.8 | 7.8 | 3.9 | 50% | 0,077 |

(Footnotes of Table 3) The amounts of the C and D components indicate mass ratios (parts by mass) with respect to 1 part by mass of hydrophobized TOP or hydrophobized CM pulp (both are A + B).

Hydrophobized CM pulp is a hydrophobized carboxymethylated pulp composition obtained using the carboxymethylated cellulose obtained in Production Example 2 in place of the oxidized cellulose in Example 20 by performing similar hydrophobizing treatment.

As can be seen from Table 3, all the examples showed well-balanced strength; in particular Examples 20 to 23 showed favorable tensile characteristics, a smaller elastic modulus change by temperature, and a moderate loss tangent, which were better balanced.

These results indicate that the rubber additive composition of the present invention is added to the rubber component, whereby a rubber composition having well-balanced strength can easily be obtained.

## Claims

1. A rubber additive composition, the composition comprising:

    (A): anion-modified cellulose; and
    (B): a hydrophobizing agent,

    the component (B) containing at least one selected from the group consisting of:

    (B1): a polyether amine having a primary amino group at an end of a polyether skeleton; and
    (B2): an amine compound having a hydrocarbon group with a carbon number of 3 to 50 or a quaternary ammonium salt having a hydrocarbon group with a carbon number of 3 to 50.

2. The rubber additive composition according to claim 1, wherein the component (A) contains oxidized cellulose, carboxymethylated cellulose, or phosphate-esterified cellulose.

3. The rubber additive composition according to claim 1 or 2, wherein the component (B1) contains polyethylene glycol polypropylene glycol amine.

4. The rubber additive composition according to any one of claims 1 to 3, wherein the component (B2) contains a monoalkenyl amine or a dialkenyl dialkyl ammonium salt.

5. The rubber additive composition according to claim 4, wherein the component (B2) contains oleyl amine or a dioleyl dimethyl ammonium salt.

6. The rubber additive composition according to any one of claims 1 to 5, further comprising (C): an additive, wherein the component (C) contains at least either (C1): a dispersant or (C2): a thermoplastic resin.

7. The rubber additive composition according to claim 6, wherein the component (C2) contains a modified polyolefin.

8. The rubber additive composition according to any one of claims 1 to 7, wherein the rubber additive composition has a water content of 50% by mass or less.

9. The rubber additive composition according to any one of claims 1 to 8, wherein the rubber additive composition is a dry pulverized product having a bulk density of 0.1 to 1 $g/cm^3$.

10. A method for producing the rubber additive composition according to any one of claims 1 to 9, the method comprising:

    Step 1: mixing the component (A) and the component (B) together to obtain a mixture; and
    Step 2: drying the mixture to obtain a mixed dry product.

11. The method for producing the rubber additive composition according to claim 10, wherein when mixing the component (A) and the component (B) together, the component (C1) and/or the component (C2) are further added.

12. The method for producing the rubber additive composition according to claim 10, wherein when mixing the component (A) and the component (B) together, the component (C1) is further added, further performing Step 3: blending the

component (C2) into the mixed dry product.

13. A rubber composition comprising a kneaded product of a rubber component and the rubber additive composition according to any one of claims 1 to 9.

14. A method for producing a rubber composition, the method comprising a step of kneading a rubber component and the rubber additive composition according to any one of claims 1 to 9.

15. The method for producing a rubber composition according to claim 14, wherein the step of kneading includes:

mixing the component (A) and the component (B) together to obtain a mixture;
drying the mixture to obtain a mixed dry product; and
kneading the mixed dry product and a rubber component together.

16. The method for producing a rubber composition according to claim 14 or 15, wherein when mixing the component (A) and the component (B) together, the component (C1) and/or the component (C2) are further added.

17. The method for producing a rubber composition according to claim 14 or 15, further performing

when mixing the component (A) and the component (B) together, further adding the component (C1) and blending the component (C2) during the kneading.

**INTERNATIONAL SEARCH REPORT**

International application No.
PCT/JP2020/039237

A. CLASSIFICATION OF SUBJECT MATTER
C08L21/00(2006.01)i; C08J3/12(2006.01)i; C08J5/04(2006.01)i; C08K5/17(2006.01)i; C08K5//19(2006.01)i; C08L1/08(2006.01)i; C08L23/26(2006.01)i; C08L71/02(2006.01)i
FI: C08L21/00; C08L71/02; C08L1/08; C08K5/19; C08L23/26; C08J3/12 A CEP; C08J5/04 CEQ; C08K5/17
According to International Patent Classification (IPC) or to both national classification and IPC

B. FIELDS SEARCHED

Minimum documentation searched (classification system followed by classification symbols)
C08L21/00; C08J3/12; C08J5/04; C08K5/17; C08K5/19; C08L1/08; C08L23/26; C08L71/02

Documentation searched other than minimum documentation to the extent that such documents are included in the fields searched

| | |
|---|---|
| Published examined utility model applications of Japan | 1922-1996 |
| Published unexamined utility model applications of Japan | 1971-2020 |
| Registered utility model specifications of Japan | 1996-2020 |
| Published registered utility model applications of Japan | 1994-2020 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2017-052942 A (KAO CORP.) 16 March 2017 (2017-03-16) claims, paragraphs [0024]-[0031], [0058], [0065]-[0077], adjustment example 2, production example 4, examples 10-11 | 1-5, 8-10, 13-15 |
| X | JP 2017-008157 A (KAO CORP.) 12 January 2017 (2017-01-12) claims, paragraphs [0021]-[0028], [0055], [0061]-[0080], [0097], adjustment example 2, production example 2, example 5 | 1-5, 8-10, 13-15 |
| X | WO 2018/147342 A1 (NIPPON PAPER INDUSTRIES CO., LTD.) 16 August 2018 (2018-08-16) claims, paragraphs [0014], [0075]-[0085], production examples 1-2, examples 1-4, 6-11], comparative example 3 | 1-2, 4-6, 8-17 |
| A | JP 2018-193465 A (NIPPON PAPER INDUSTRIES CO., LTD.) 06 December 2018 (2018-12-06) | 1-17 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 10 December 2020 (10.12.2020) | 22 December 2020 (22.12.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2020/039237

C (Continuation). DOCUMENTS CONSIDERED TO BE RELEVANT

| Category* | Citation of document, with indication, where appropriate, of the relevant passages | Relevant to claim No. |
|---|---|---|
| A | JP 2018-162549 A (NIPPON PAPER INDUSTRIES CO., LTD.) 18 October 2018 (2018-10-18) | 1-17 |

Form PCT/ISA/210 (continuation of second sheet) (January 2015)

**INTERNATIONAL SEARCH REPORT**
Information on patent family members

International application No.
PCT/JP2020/039237

| Patent Documents referred in the Report | Publication Date | Patent Family | Publication Date |
|---|---|---|---|
| JP 2017-052942 A | 16 Mar. 2017 | (Family: none) | |
| JP 2017-008157 A | 12 Jan. 2017 | (Family: none) | |
| WO 2018/147342 A1 | 16 Aug. 2018 | US 2020/0362146 A1 claims, paragraphs [0023], [0087]-[0098], production examples 1-2, examples 1-4, 6-11, comparative example 3<br>EP 3581618 A1<br>CN 110291149 A | |
| JP 2018-193465 A | 06 Dec. 2018 | (Family: none) | |
| JP 2018-162549 A | 18 Oct. 2018 | WO 2018/116661 A1<br>EP 3560964 A1<br>US 2020/0087417 A1 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2018193465 A
- JP 2017052942 A